(19) Europäisches Patentamt

European Patent Office

Office européen des brevets

(11) **EP 0 976 448 A1**

(12) **EUROPEAN PATENT APPLICATION**
published in accordance with Art. 158(3) EPC

(43) Date of publication:
02.02.2000 Bulletin 2000/05

(51) Int. Cl.⁷: **B01J 19/26**

(21) Application number: 98907163.4

(22) Date of filing: 11.03.1998

(86) International application number:
PCT/JP98/01003

(87) International publication number:
WO 98/41320 (24.09.1998 Gazette 1998/38)

(84) Designated Contracting States:
CH DE ES FR GB IT LI

(30) Priority: 14.03.1997 JP 6025997
16.05.1997 JP 12657497
16.07.1997 JP 19121497

(71) Applicants:
• Dainippon Seiki Co., Ltd.
Nagaokakyo-shi, Kyoto 617-0833 (JP)
• FUJISAWA PHARMACEUTICAL CO., LTD.
Osaka-shi Osaka 541-8514 (JP)

(72) Inventors:
• MIYOSHI, Hajime,
Dainippon Seiki Co., Ltd.
Nagaokakyo-shi, Kyoto 617-0833 (JP)

• MINO, Yutaka,
Dainippon Seiki Co., Ltd.
Nagaokakyo-shi, Kyoto 617-0833 (JP)
• NAKAMURA, Osamu,
Dainippon Seiki Co., Ltd.
Nagaokakyo-shi, Kyoto 617-0833 (JP)
• NISHIMURA, Shintaro
Settsu-shi, Osaka 566-0035 (JP)
• TANAKA, Akito
Takarazuka-shi, Hyogo 665-0831 (JP)

(74) Representative:
Paul, Dieter-Alfred, Dipl.-Ing. et al
Fichtestrasse 18
41464 Neuss (DE)

(54) **AUTOMATIC SYNTHESIS APPARATUS**

(57) An automated synthesis apparatus which is suitable for preparing various kinds of samples in small quantities for pharmacological evaluation, eliminates the need to clean pipetting means for reaction solvent and mixture stirring means, obviates the likelihood of contamination and is diminished in noise. The apparatus comprises container holders (2), (3) for stowing therein a plurality of liquid containers (10), (13) each containing a reaction solvent to be transferred, a nozzle tip holder (4) for stowing therein disposable nozzle tips (15), a rotary shaker (6) having a reaction vessel stand (38) for shaking a plurality of reaction vessels (48) as placed therein, and a pipetting device (7) movable between each of the holders (2), (3), (4) and the reaction vessel stand (38) of the rotary shaker (6) and removably fittable with the nozzle tip (15) automatically for sucking the liquid from the liquid container (10) or (13) into the fitted nozzle tip (15) and discharging the solvent into the reaction vessel (48).

Fig.2

EP 0 976 448 A1

## Description

BACKGROUND OF THE INVENTION

1. Field of the Invention

The present invention relates to an automated synthsis apparatus, and more particularly to an automated synthesis apparatus suitable for preparing, for example, various kinds of samples in small quantities for pharmacological evaluation.

2. Description of the Prior Art

It is necessary to prepare various kinds of samples in small quantities for pharmacological evaluation, and apparatus have been developed for automatically preparing such samples. Such apparatus comprise a pipetting device for placing a reaction solvent, such as a liquid material or solvent, dividedly into reaction vessels, an agitator for stirring the mixture in each reaction vessel, and a device for concentrating the resulting reaction mixture in the vessel to dryness. The pipetting device heretofore used is adapted to draw up the reaction solvent into a tube by suction from a liquid container containing the solvent to be transferred dividedly and discharging the solvent into reaction vessels having a solid material placed therein. The agitator used is one comprising a stirrer for stirring the mixture in the reaction vessel.

With the conventional automated synthesis apparatus described wherein the pipetting device has a tube, the tube needs to be cleaned every time the solvent to be drawn into the tube is changed, whereas different solvent are likely to become mixed to result in contamination even if the tube is cleaned. Further the tube permits a portion of the solvent to remain in the tube and can therefore be uneconomical. Further the stirrer included in the agitator needs to be cleaned every time a different kind of mixture is to be prepared in the vessel. The stirrer further has the problem of giving off a great noise.

Rotary shakers are already known as disclosed, for example, in JR-A No. 215275/1989 for use in stirring a sample or the like as placed in a vessel. The disclosed shaker comprises an electric drive motor mounted on a frame, a drive crank having a vertical drive shaft rotatably supported by the frame and rotatable by the motor and a vertical drive pin provided at an upper portion of the drive shaft and positioned horizontally away from the axis of the drive shaft, a driven crank having a vertical driven shaft rotatably supported by the frame and a vertical driven pin provided at an upper portion of the driven shaft and positioned away from the axis of the driven shaft by the same amount in the same direction as the drive pin of the drive crank, and a vessel stand connected to the drive pin and the driven pin by a connecting member and rotatable by the drive shaft eccentrically thereof.

With this rotary shaker, the position of the center of gravity of the vessel stand is positioned horizontally away from the axis of the drive shaft which is the center of rotation thereof, so that when the vessel stand having a weight is rotated at a high speed as positioned eccentrically of the drive shaft, a great centrifugal force acts on the vessel stand, producing imbalance of static forces and imbalance of bending moments and vibrating the vessel stand and the drive shaft. This tendency becomes pronounced with an increase in the weight of the vessel stand and with an increase in the speed of rotation. The great vibration thus produced causes damage to the bearing portion, entailing hazards. Accordingly it has been impossible to use such a rotary shaker in the automated synthesis apparatus.

With automatic biochemical analyzers such as automatic immunity measuring apparatus for automatically determining a component contained in liquids (samples) such as serum and urine by an immunoreaction, a liquid pipetting device is used for transferring the liquid from a sample tube or like container (liquid container) dividedly to reaction detection containers or like containers (receptacles), or for transferring a liquid (reagent) from a reagent bottle or like container (liquid container), as selected in conformity with the item of analysis, dividedly to receptacles. The conventional liquid pepetting device appears usable in the automated synthesis apparatus described above but has the following problem.

The conventional pipetting device mentioned comprises a vertical nozzle movable horizontally, upward and downward by a suitable drive device. The nozzle has a liquid inlet-outlet opening at its lower end. The nozzle has an upper end communicating, via a suitable channel having a solenoid valve or the like, with a syringe pump for supplying a positive pressure and negative pressure to the nozzle. At a predetermined position (sucking position) with respect to a horizontal direction and above a liquid container, the nozzle is lowered, halted with the inlet-outlet opening dipped in a liquid within the liquid container, supplied with a negative pressure to draw in the liquid, raised to above the liquid container, moved in a horizontal direction to a predetermined position (delivery position) above a receptacle or the like, lowered to a position where the inlet-outlet opening is positioned in the opening of the receptacle, supplied with a positive pressure to discharge the drawn-in liquid from the nozzle into the receptacle, raised to above the receptacle and moved to the sucking position. Through repetition of this operation, the liquid in the liquid container is transferred in portions to respective receptacles.

When the nozzle end of this pipetting device is dipped into the liquid too deep, the liquid is liable to adhere to the outer peripheral surface of the nozzle end portion, and if a large amount of the liquid adheres to the nozzle end outer surface, the liquid container needs to be replenished with the liquid frequently. Moreover, variations in the depth of dipping of the nozzle in transferring the liquid result in variations in the quantity of liquid transferred, while the adhering liquid will drip to alter the quantity transferred to impair the accuracy of pipetting operation. Additionally the nozzle end outer surface becomes soiled with the liquid markedly. In the case where the nozzle is used without replacement, the nozzle end which can not be cleaned completely is likely to contaminate another liquid to be transferred subsequently. Conversely, if the depth to which the nozzle end is dipped into the liquid is smaller than is specified, air will be drawn in to vary the quantity to be transferred to impair the accuracy of pipetting operation.

For an accurate pepetting operation, therefore, there is a need to accurately detect the liquid surface within the liquid container and to dip the nozzle into the liquid by the desired amount.

Various methods are proposed of detecting the liquid surface in the liquid container. These methods are divided into those adapted to detect the position (level) of the liquid surface, and those adapted to detect that the lower end of the nozzle has reached the liquid surface while lowering the nozzle.

An example of the former is a method of detecting the position of the liquid surface, for example, with use of a float. This method requires floats corresponding in number to the number of liquid containers and is difficult to practice automatically.

Alternatively, an electrode is used for detecting the position of the liquid surface. This methods also requires electrodes corresponding in number to the number of liquid containers and additionally has the problem that the contact of the electrode with the liquid contaminates the liquid.

Further there is a method of detecting the position of the liquid surface using a photoelectric switch. This method also requires photoelectric switches corresponding in number to the number of liquid containers. Moreover, the liquid container to be used is limited only to a transparent one, while it is generally difficult to detect the liquid surface when the liquid is transparent. Since the photoelectric switch detect the liquid surface from outside the container, the switch is not usable for containers which are arranged closely.

Further there is a method of detecting the position of the liquid surface from a variation in the capacitance of the liquid surface. This method also requires sensors corresponding in number to the number of liquid containers and has the problem of contaminating the sample by the contact of the sensor with the liquid surface. The capacitance sensor may be provided on the nozzle but is still likely to cause contamination and is dimensionally difficult to use if the container has an opening of small diameter.

Further ultrasonic waves are usable for detecting the relative distance between the nozzle and the liquid surface. In this case, an ultrasonic sensor needs only to be provided on the nozzle, whereas if the liquid to be transferred is an organic solvent or the like, there arises the problem that ultrasonic waves are irregularly reflected at a layer of vapor on the liquid surface, producing an error in the measurement.

According to an example of the latter which is disclosed, for example, in JP-A No. 243960/1990, a nozzle is lowered while supplying a negative pressure to the nozzle by a syringe pump, and the contact of the nozzle with the liquid surface is detected from a variation in the internal pressure of the nozzle.

Although a pressure sensor needs only to be provided on the nozzle in this case, it is required to continuously supply the negative pressure to the nozzle by operating the syringe pump until the nozzle reaches the liquid surface, hence a cumbersome procedure. Although a syringe pump for drawing in and drawing off the liquid is usable for supplying the negative pressure to the nozzle for the detection of the liquid surface, it is then necessary to draw in the liquid by supplying the negative pressure to the nozzle further after the nozzle has reached the liquid surface. It is therefore not easy to control the syringe pump so as to accurately draw in the desired quantity of the liquid. Moreover, an inaccurate quantity will be drawn in since a small amount is sucked in the moment the liquid surface is detected. This problem can be obviated by using another pump for supplying the negative pressure during the descent of the nozzle, in addition to the syringe pump for drawing in and off the liquid, whereas the additional pump then becomes necessary.

There is also a method of detecting that a nozzle has reached the liquid surface by a variation in the internal pressure of the nozzle while lowering the nozzle with a positive pressure supplied to the nozzle. The liquid surface then becomes wavy and therefore is not detectable accurately, and air bubbles are drawn in from the liquid surface, permitting transfer of an inaccurate quantity of liquid.

An object of the present invention is to provide an automated synthesis apparatus which eliminates the need to clean pipetting means for reaction solvent and mixture stirring means, obviates the likelihood of contamination and is diminished in noise.

Another object of the present invention is to provide an automated synthesis apparatus wherein a rotary shaker is made usable with safety by suppressing the vibration of a reaction vessel stand and drive shaft of the shaker.

Another object of the invention is to provide an automated synthesis apparatus comprising a pipetting device which is adapted to accurately detect the surface of a reaction solvent and to transfer the solvent in an accurate quantity, and which is simple in construction and easy to control. SUMMARY OF THE INVENTION

The present invention provides an automated synthesis apparatus characterized in that the apparatus comprises:

a container holder for stowing therein a plurality of liquid containers each containing a reaction solvent to be transferred,

a nozzle tip holder for stowing therein disposable nozzle tips,

a rotary shaker having a reaction vessel stand for shaking a plurality of reaction vessels as placed therein, and

pipetting means movable between each of the holders and the reaction vessel stand of the rotary shaker and removably fittable with the nozzle tip automatically for sucking the solvent from the liquid container into the fitted nozzle tip and discharging the solvent into the reaction vessel.

The reaction solvent include liquid materials, solvents, etc. Liquid containers containing the respective required liquids among these liquids are stowed in the container holder. The term "liquid material" as used herein includes all of a liquid material itself, and solutions prepared by dissolving a solid material or liquid material in a solvent. The term "material" includes a reagent or the like.

The automated synthesis apparatus of the invention uses disposable nozzle tips. The nozzle tip already in use is discarded, and a new nozzle tip is used every time a different kind of reaction solvent is to be transferred. This eliminates the need for cleaning, further obviating the likelihood of contamination of one reaction solvent with another liquid.

The rotary shaker is used for shaking the reaction vessels to stir the mixtures contained in the respective vessels and to be reacted. This eliminates the need to use a stirrer for stirring the mixture, therefore produces only a small noise and obviates the conventional practice of cleaning the stirrer and the likelihood of contaminating one reaction solvent with another.

The automated synthesis apparatus comprises, for example, means for concentrating a reaction mixture within the reaction vessel to dryness.

The rotary shaker comprises, for example, a drive device mounted on a fixed portion, a drive crank having a vertical drive shaft rotatably supported by the fixed portion and rotatable by the drive device and a vertical drive pin provided at an upper portion of the drive shaft and positioned horizontally away from an axis of the drive shaft, a driven crank having a vertical driven shaft rotatably supported by the fixed portion and a vertical driven pin provided at an upper portion of the driven shaft and positioned away from an axis of the driven shaft by the same amount in the same direction as the drive pin of the drive crank, and the reaction vessel stand, the reaction vessel stand being rotatably connected to the drive pin and the driven pin by a connecting member and rotatable by the drive shaft eccentrically thereof, the drive shaft being provided with balance means having a plurality of eccentric balancers for suppressing vibration owing to the eccentricity of the position of the center of gravity of the vessel stand relative to the axis of the drive shaft.

In the case where the rotary shaker is thus constructed, the balance means having eccentric balancers suppresses the vibration of the reaction vessel stand and the drive shaft produced by centrifugal forces during rotation. During rotation, the balancers of the balance means reduce the resultant force of centrifugal forces acting on the portion including the reaction vessel stand and all the balancers combined therewith and a resultant bending moment due to the centrifugal forces, diminishing the imbalance of static forces due to the centrifugal forces and the imbalance of bending moments due to the centrifugal forces, whereby the vibration can be suppressed. This results in a smaller noise and prevents the damage or break of the bearing portion, improving the safety of the automated synthesis apparatus despite the use of the rotary shaker.

In the rotary shaker described, the balancers of the balance means are, for example, so arranged as to reduce the resultant force of centrifugal forces acting on the portion including the reaction vessel stand and all the balancers combined therewith and a resultant bending moment due to the centrifugal forces during rotation.

This arrangement reduces the resultant force of centrifugal forces acting on the portion including the reaction vessel stand and all the balancers in combination therewith and a resultant bending moment due to the centrifugal forces during rotation, diminishing the imbalance of static forces due to the centrifugal forces and the imbalance of bending moments due to the centrifugal forces, whereby the vibration can be suppressed.

In the rotary shaker described, the balance means has, for example, at least one balancer of a first kind and at least one balancer of a second kind, and the balancer of the first kind has a center of gravity positioned at the opposite side of the position of the center of gravity of the reaction vessel stand with respect to the axis of the drive shaft, the balancer of the second kind having a center of gravity positioned at the same side as the position of the center of gravity of the reaction vessel stand with respect to the axis of the drive shaft.

In the case of this arrangement, the balancer of the first kind has a center of gravity positioned at the opposite side of the position of the center of gravity of the reaction vessel stand with respect to the axis of the drive shaft, and the balancer of the second kind has a center of gravity positioned at the same side as the position of the center of gravity of the reaction vessel stand with respect to the axis of the drive shaft, consequently reducing the resultant force of the centrifugal forces and the resultant bending moment due to the centrifugal forces to diminish the imbalance of static forces due to the centrifugal forces and the imbalance of bending moments due to the centrifugal forces, whereby the vibration can be suppressed.

In the rotary shaker described, one balancer of the first kind is provided at an upper portion of the drive shaft, and one balancer of the second kind is provided at a lower portion of the drive shaft.

In this case, the resultant force of the centrifugal forces and the resultant bending moment due to the centrifugal forces can be reduced merely by providing two balancers on the drive shaft to diminish the imbalance of static forces due to the centrifugal forces and the imbalance of bending moments due to the centrifugal forces, whereby the vibration can be suppressed.

In the rotary shaker described, for example, P and Q represented by the following equations are each in a predetermined range containing 1.

$$P = M1 \times R1/(M0 \times a + M2 \times R2)$$

$$Q = M0 \times \underline{a} \times L1/M2 \times R2 \times L2$$

wherein M0, M1 and M2 are the weights of the reaction vessel stand, the balancer of the first kind and the balancer of the second kind respectively, $\underline{a}$, R1 and R2 are the respective horizontal eccentricity distances of the positions of the centers of gravity of the reaction vessel stand, the balancer of the first kind and the balancer of the second kind from the axis of the drive shaft, L1 is the vertical distance from the position of the center of gravity of the reaction vessel stand to the position of the center of gravity of the balancer of the first kind, and L2 is the vertical distance from the position of the center of gravity of the balancer of the first kind to the position of the center of gravity of the balancer of the second kind.

Then P is 1, the resultant force of the centrifugal forces is theoretically 0 regardless of the weight and the speed of rotation of the reaction vessel stand, eliminating the imbalance of static forces due to the centrifugal forces. Further when Q is 1, the resultant bending moment due to the centrifugal forces is theoretically 0 regardless of the weight and the speed of rotation of the reaction vessel stand, eliminating the imbalance of bending moments due to the centrifugal forces. Accordingly, the resultant force of the centrifugal forces and the resultant bending moment due to the centrifugal forces can be reduced by adjusting each of P and Q to a predetermined range containing 1, to diminish the imbalance of static forces due to the centrifugal forces and the imbalance of bending moments due to the centrifugal forces, whereby the vibration can be suppressed.

In the rotary shaker described, P and Q are, for example, each in the range of 0.8 to 1.2.

Since each of P and Q is then approximate to 1, the resultant force of the centrifugal forces and the resultant bending moment due to the centrifugal forces can be reduced to diminish the imbalance of static forces due to the centrifugal forces and the imbalance of bending moments due to the centrifugal forces, whereby the vibration can be suppressed.

Incidentally, such a rotary shaker can be used in devices other than automated synthesis apparatus.

The shaker is usable, for example, in automatic biochemical analyzers for stirring samples placed in test tubes or like containers. In this case, containers suitable for the use are stowed in the reaction vessel stand.

The pipetting means comprises, for example, a tubular nozzle having a lower end fittable with a nozzle tip, nozzle drive means for moving the nozzle in a horizontal plane and moving the nozzle upward and downward, pressure supply means for supplying a positive pressure and a negative pressure to the nozzle, a channel holding the nozzle in communication with the pressure supply means, and liquid surface sensor means for detecting that a liquid inlet-outlet opening of the nozzle tip at a lower end thereof has reached a liquid surface, the liquid surface sensor means comprising differential pressure sensor means in communication with the channel for detecting the pressure difference between the internal pressure of the nozzle and the channel communicating therewith and the atmospheric pressure, and detector means for detecting that the liquid inlet-outlet opening of the nozzle tip has reached the liquid surface by an increase in the pressure difference over a predetermined value. Thus, the liquid surface sensor means detects the pressure difference between the atmospheric pressure and the internal pressure of the nozzle and the channel communicating therewith during the descent of the nozzle toward the liquid surface, and detects that the inlet-outlet opening of the nozzle tip has reached the liquid surface by an increase in the pressure difference over the predetermined value.

When the lower-end opening of the nozzle tip reaches the liquid surface, the liquid ingresses into the nozzle tip owing to capillary action, finely varying the volume of air within the nozzle and the channel in communication therewith to result in a fine variation in the internal pressure. Accordingly, upon the pressure difference between the atmospheric pressure and the internal pressure of the nozzle and the channel increasing over the predetermined value, this is detected to indicate that the nozzle tip opening has reached the liquid surface.

The liquid surface can be detected even if containers of small opening diameter are in a close arrangement since the nozzle tip is merely inserted into the container.

There is no need to supply a pressure (positive or negative) to the nozzle during the descent of the nozzle, so that no pressure supply means is required in addition to the pressure supply means for sucking in and discharging the liquid. After the nozzle tip has reached the liquid surface, the tip is dipped into the liquid by a predetermined amount, and the pressure supply means is then operated to accurately suck the desired quantity of the liquid into the nozzle. The pressure supply means is therefore easy to control.

Even if the ambient temperature changes, the pressure difference between the atmospheric pressure and the internal pressure of the nozzle and the channel in communication therewith remains unaltered. Further even if the nozzle or channel is subjected to a vibration during the descent of the nozzle, the internal pressure of the nozzle and the channel remains unaltered since no variation occurs in the inside volume of the nozzle or the channel, consequently ensuring accurate detection of the liquid surface at all times.

In this way, it is possible to accurately detect that the nozzle tip has reached the liquid surface for the accurate detection of the liquid surface to ensure transfer of the liquid with high accuracy. Moreover, the means for performing the above procedure is simple in construction and easy to control.

The pipetting means is provided with gas supply means in communication with the channel for supplying air, nitrogen or like gas to the nozzle and the channel communicating therewith.

The gas can then be supplied to the nozzle and the channel communicating therewith to eliminate the vapor pressure remaining in the nozzle and the channel before detecting the pressure difference, consequently making it possible to accurately detect the pressure difference for the accurate detection of the liquid surface.

The pippetting device described is usable also in devices, such as automatic biochemical analyzers, other than the automated synthesis apparatus. A nozzle of integral type having a liquid inlet-outlet opening at its lower end is alternatively usable instead of using the disposable nozzle tip.

BRIEF DESCRIPTION OF THE DRAWINGS

FIG. 1 is a plan view partly broken away and showing an automated synthesis apparatus embodying the invention;
FIG. 2 is a front view partly broken away of FIG. 1;
FIG. 3 is a left side elevation partly broken away of FIG. 1;
FIG. 4 is a right side elevation partly broken away and showing a rotary shaker;
FIG. 5 is a plan view partly broken away of FIG. 4;
FIG. 6 is a view in vertical section showing a portion of FIG. 4 on an enlarged scale;
FIG. 7 is a right side elevation partly broken away and showing another portion of FIG. 4 on an enlarged scale;
FIG. 8 is a diagram schematically showing a portion of FIG. 6 on an enlarged scale to illustrate the balance of static forces effected by centrifugal forces during rotation and the balance of bending moments by the centrifugal forces;
FIG. 9 is a diagram showing the overall construction of a pipetting device;
FIG. 10 is a diagram showing the construction of the main portion of the pipetting device;
FIG. 11 is a plan view partly broken away and showing the main portion of the pipetting device;
FIG. 12 is a right side elevation partly broken away of FIG. 11;
FIG. 13 is an enlarged view in section taken along the line S13-S13 in FIG. 11;
FIG. 14 is an enlarged view in section taken along the line S14-S14 in FIG. 11;
FIG. 15 is a fragmentary enlarged view in section of FIG. 14;
FIG. 16 is a plan view partly broken away of a front portion of FIG. 13;
FIG. 17 is a view in section taken along the line S17-S17 in FIG. 13;
FIG. 18 is a view in section taken along the line S18-S18 in FIG. 13;
FIG. 19 is a view in section taken along the line S19-S19 in FIG. 13;
FIG. 20 is an enlarged view in section taken along the line S20-S20 in FIG. 2;
FIG. 21 is a diagram showing the states of solenoid valves in a step of the operation of the pipetting device;
FIG. 22 is a diagram showing the states of the solenoid valves in another step, different from the above step, of the operation of the pipetting device;
FIG. 23 is a diagram showing the states of the solenoid valves in another step, different from the above steps, of the operation of the pipetting device; and
FIG. 24 is a diagram showing the states of the solenoid valves in still another step, different from the above steps, of the operation of the pipetting device.

DESCRIPTION OF THE PREFERRED EMBODIMENT

A description will be given of the best mode of carrying out the invention with reference to the drawings.

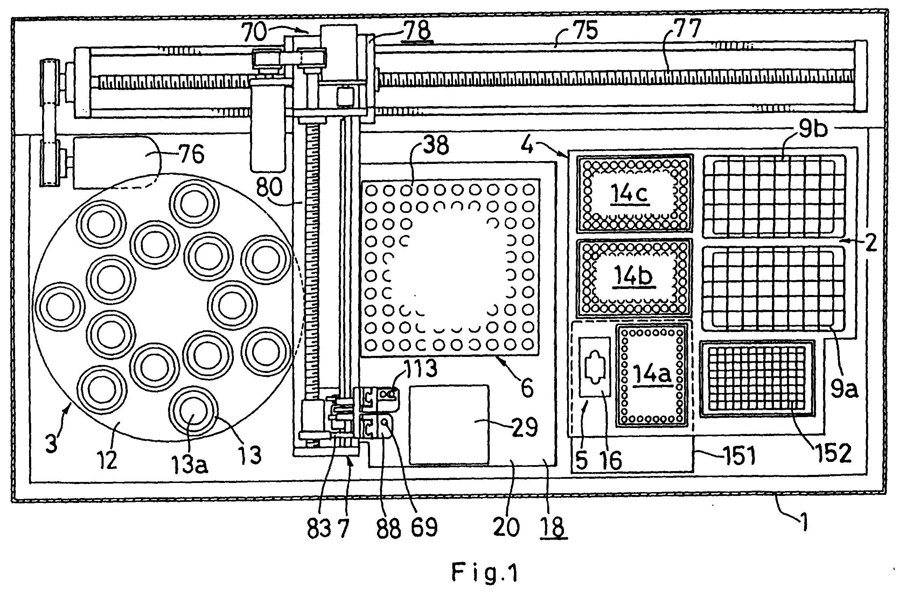

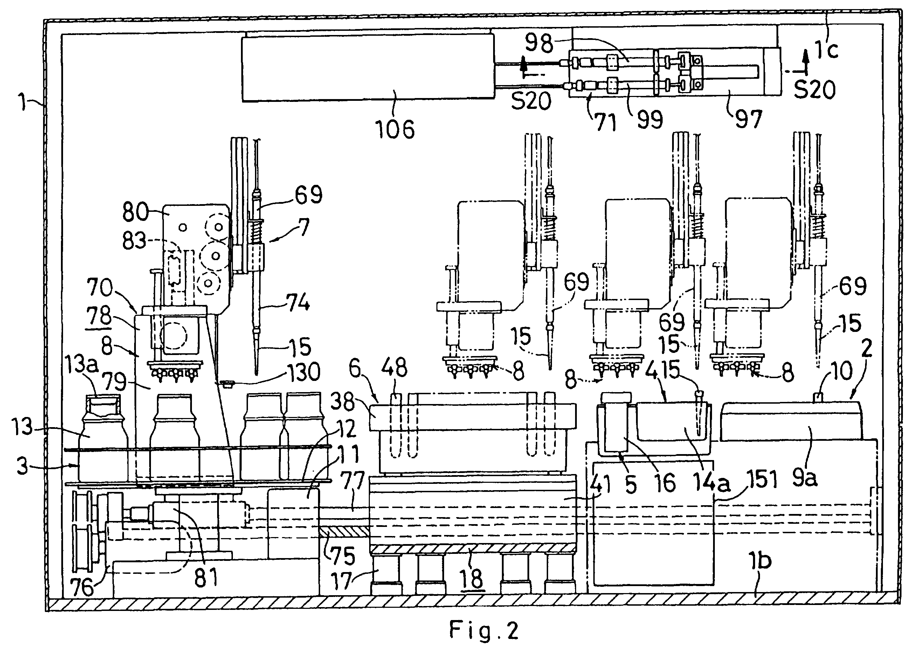

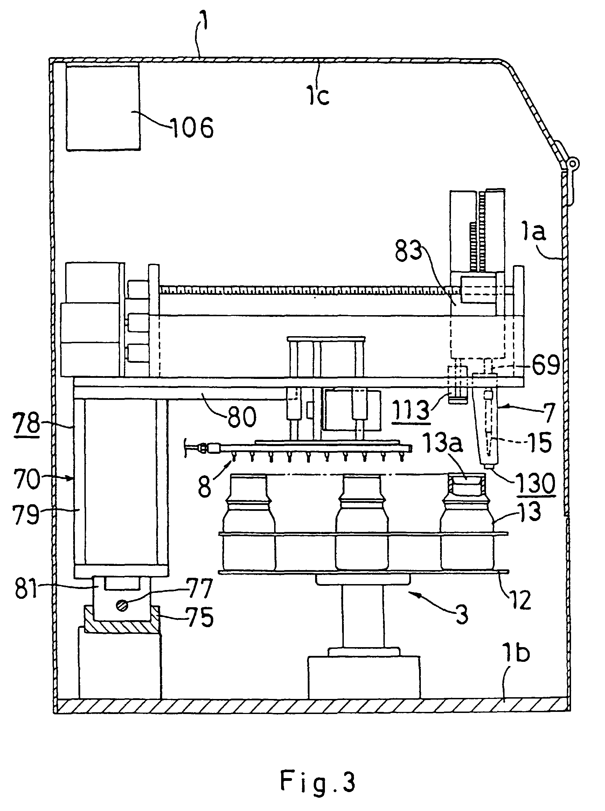

FIGS. 1 to 3 show the overall construction of an automated synthesis apparatus. FIG. 1 is a plan view partly broken away, FIG. 2 is a front view partly broken away, and FIG. 3 is a left side elevation partly broken away. In the following description, the lower side of FIG. 1 (the right-hand side of FIG. 3) will be referred to as the front, the upper side of FIG. 1 (the left-hand side of FIG. 3) as the rear, and the terms "left" and "right" are used for the apparatus as it is seen from the front rearward. Thus, the left-hand side and the right-hand side of FIGS. 1 and 2 will be referred to as the left and the right, respectively.

The automated synthesis apparatus has main components which are housed in a generally rectangular parallelepipedal case 1 having a door 1a at its front side. Stated more specifically, arranged in the case 1 are a material container holder 2, solvent container holder 3, sample receptacle holder 152, nozzle tip holder 4, nozzle tip disposal portion 5, rotary shaker 6, pipetting device 7 providing pipetting means, and a reaction mixture concentrating device 8 provided in the pipetting device 7 and constituting means for concentrating reaction mixtures to dryness.

The material container holder 2 constitutes a liquid container holder and is disposed in a lower portion of the interior of the case 1 in immediate proximity to the right side wall thereof. The holder 2 has material container tables 9a, 9b. A plurality of material containers (liquid containers) 10 respectively containing various kinds of liquid materials (reaction solvent) are stowed in the tables 9a, 9b, each in a specified position. The liquid materials contained in the containers 10 include aniline, cyclohexylamine, piperazine, etc.

The solvent container holder 3, constituting the liquid container holder, is disposed in a lower portion of the interior of the case 1 in immediate proximity to the left side wall thereof. The holder 3 comprises a horizontal solvent container positioning turntable 12 drivingly rotatable about a vertical axis by an electric motor 11. A plurality of solvent containers (liquid containers) 13 respectively containing various kinds of solvents are placed on the turntable 12, each in a specified position. Each of the solvent containers 13 has an upper-end opening closed with a lid 13a thereon. Although not shown, an iron plate to be attracted is secured to the upper surface of the lid 13a of each solvent container 13. The solvents contained in the containers 13 include water, ethyl acetate, dimethylformamide, dichloromethane, etc.

The sample vessel holder 152 is provided in front of the material container holder 2 in immediate proximity thereto. Although not shown, a plurality of sample vessels are stowed in the holder 152 for containing the samples prepared.

The nozzle tip holder 4 is provided at the left of the material container holder 2 immediately adjacent thereto. The holder 4 has a plurality of nozzle tip stands 14a, 14b, 14c each having a plurality of new disposable nozzle tips 15 stowed therein. The nozzle tips 15 are divided into groups of different kinds in accordance with the kind of the liquid to be transferred or the quantity thereof.

The nozzle tip disposal portion 5 is provided immediately adjacent to the left side of a portion of the nozzle tip holder 4, i.e., of the front nozzle tip stand 14a and also under the frame. The disposal portion 5 has a nozzle tip removing station 16 for removing the used nozzle tip 15 from the pipetting device 7 to be described later, and a used nozzle tip container 151 for placing in the removed nozzle tip.

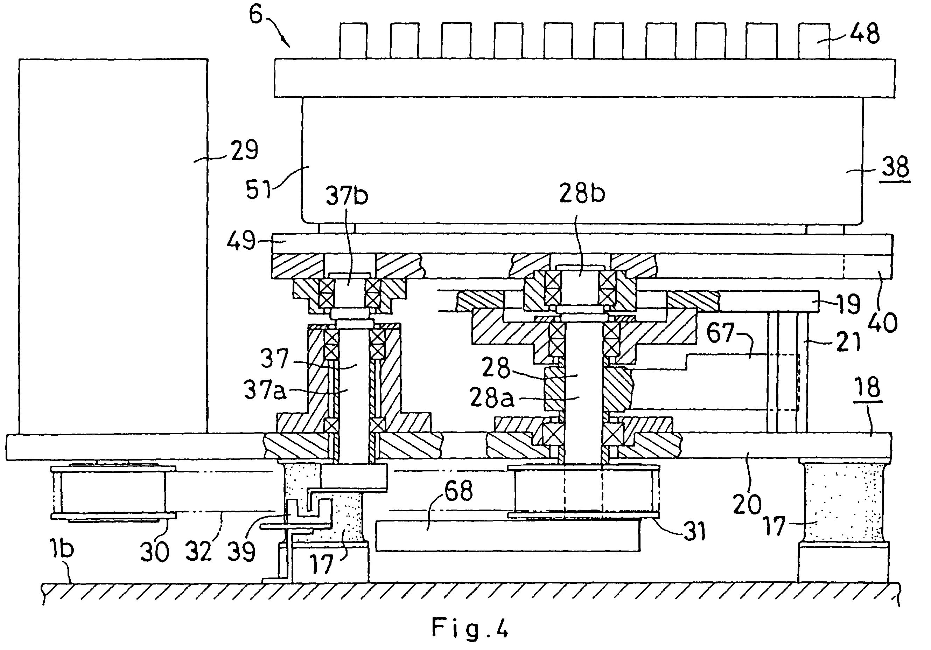

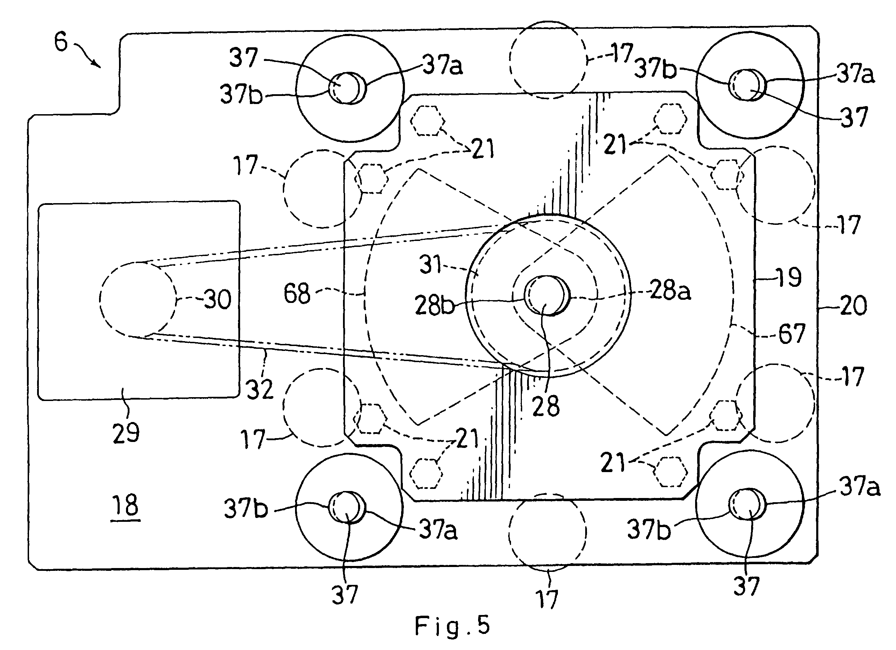

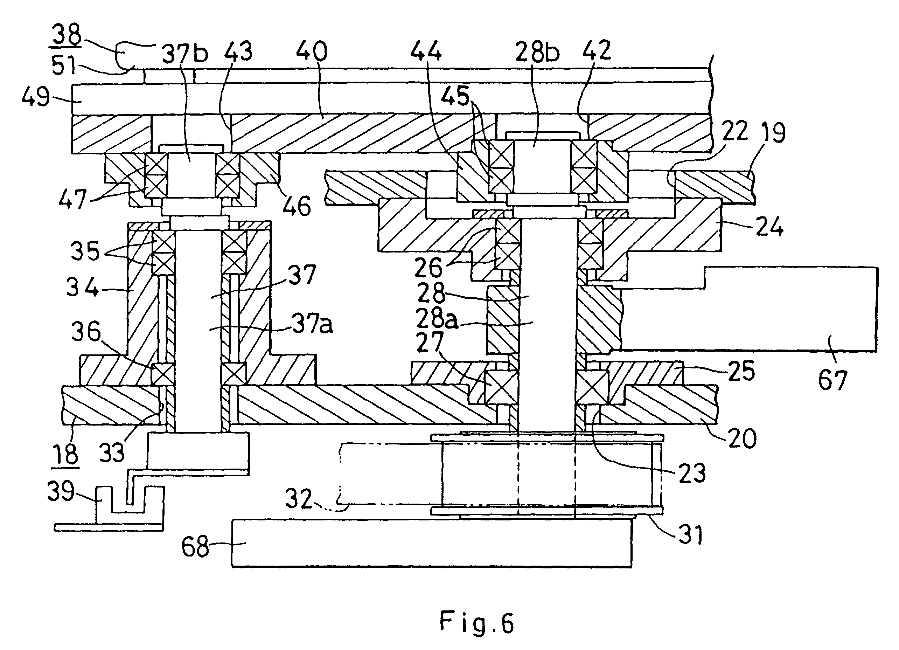

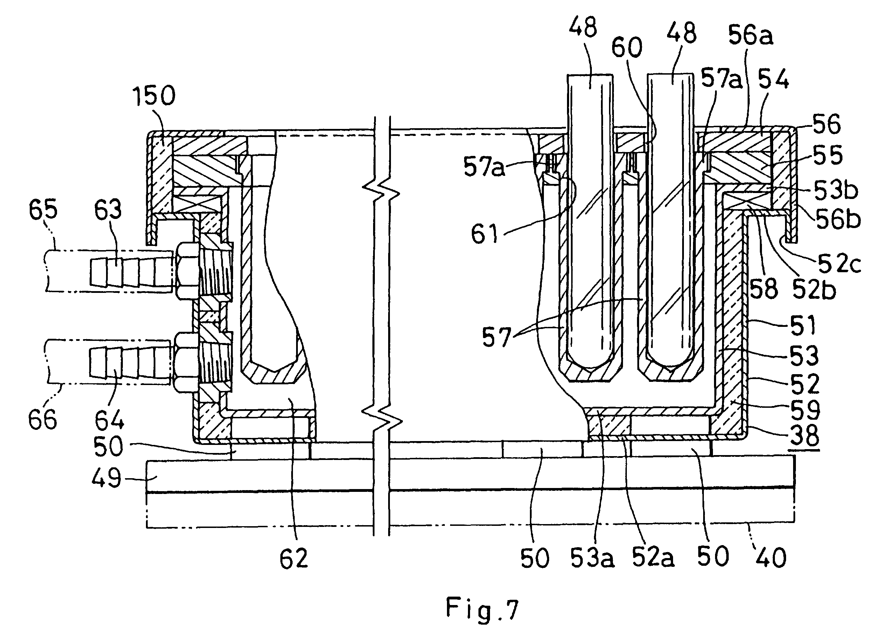

The rotary shaker 6 is disposed approximately in the center of the case 1 between the solvent container holder 3 and the nozzle tip holder 4 and shown in detail in FIGS. 4 to 8. FIG. 4 is a right side elevation partly broken away and showing the rotary shaker 6, FIG. 5 is a plan view partly broken away of the same, FIGS. 6 and 7 are views in vertical section showing different portions of FIG. 4 on an enlarged scale, and FIG.

8 is a diagram schematically showing a portion of FIG. 6 on an enlarged scale to illustrate the balance of static forces effected by centrifugal forces during rotation and the balance of bending moments by the centrifugal forces. With reference to FIGS. 4 and 5, the case 1 has a

bottom wall 1b, on which a fixed frame 18 constituting a fixed portion of the shaker 6 is fixedly supported by a plurality of (six in this embodiment) vibration proof members 17 of rubber. The fixed frame 18 comprises upper and lower horizontal support plates 19, 20 in a rectangular shape and arranged in parallel to each other, and a plurality of (eight in this embodiment) posts 21 interconnecting these plates. The lower support plate 20 is fixedly placed on the vibration proof members 17. The lower plate 20 extends outward beyond the upper plate 19, especially greatly toward the front.

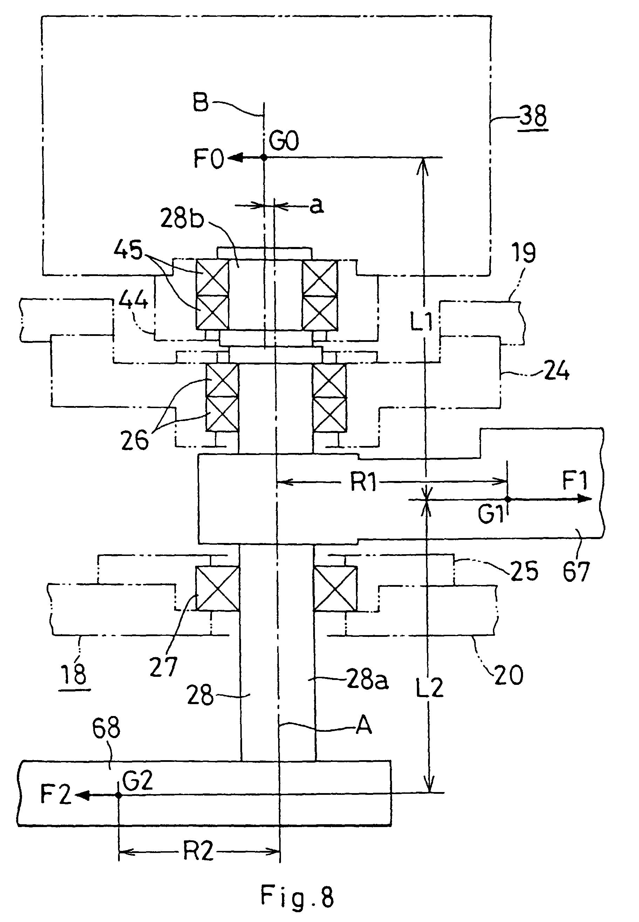

As shown in detail in FIG. 6, concentric circular holes 22, 23 are formed respectively in the central portion of the upper support plate 19 and in the lower support plate 20 at the portion thereof immediately below the central portion. A bearing housing 24 fixed to the lower side of the upper plate 19 around the hole 22 and a bearing housing 25 fixed to the upper side of the lower plate 20 around the hole 23 have antifriction bearings 26, 27 for rotatably supporting a vertical drive crank 28. The drive crank 28 comprises a vertical drive shaft 28a and a vertical eccentric drive pin 28b formed at the top thereof integrally therewith. The drive shaft 28a is supported by the bearings 26, 27. The drive shaft 28a has a lower portion extending through the hole 23 in the lower plate 20 to project downward. The drive pin 28b is positioned inside the hole 22 in the upper plate 19 and has an upper portion projecting slightly upward beyond the upper plate 19. As shown in detail in FIG. 8, the axis B of the drive pin 28b is positioned away from the axis A of the drive shaft 28a toward one side (toward front in the illustrated state) in a horizontal direction. It is assumed that the horizontal eccentricity distance of the axis B of the drive pin 28b from the axis A of rotation is $\underline{a}$. An electric motor 29 is fixed as directed downward to the lower support plate 20 on the upper side of the portion thereof extending leftward beyond the upper support plate 19. A timing belt 32 is reeved around a pulley 30 fixed to the drive shaft (not shown) of the motor 29 which shaft extends downward below the plate 20 and a pulley 31 fixed to the portion of the drive shaft 28a projecting downward below the lower plate 20. When driven, the motor 29 rotates the drive crank 28 about the axis A of rotation, rotating the drive pin 28b eccentrically of the drive shaft.

A hole 33 is formed at each of a plurality of (four in this embodiment) portions of the lower support plate 20 which are centered about the hole 23. A bearing housing 34 in the form of a vertical hollow cylinder and fixed to the upper side of the lower support plate 20 around the hole 33 has antifriction bearings 35, 36 rotatably supporting a vertical driven crank 37. The driven crank 37 is similar to the drive crank 28 in shape. More specifically, the driven crank 37 comprises a vertical driven shaft 37a, and an eccentric driven pin 37b formed at the top of the shaft integrally therewith. The driven shaft 37a is supported by the bearings 35, 36. The axis of the driven pin 37b is positioned away from the axis of the driven shaft 37a in the same direction and by the same distance $a$ as the drive pin of the drive crank 28. The driven pin 37b extends upward beyond the bearing housing 34 and is positioned at approximately the same level as the drive pin 28b. The driven shaft 37a of one of such driven cranks 37 has a lower portion projecting downward through the hole 33 of the lower support plate 20. Mounted on the bottom wall 1b of the case 1 is a sensor 39 for halting the motor 29 at a predetermined rotated position of the driven crank 37 so as to stop the reaction vessel stand 38 to be described below at the home position after shaking by rotation.

The reaction vessel stand 38 is connected to the drive pin 28b and the driven pins 37b by a rectangular horizontal connecting plate 40 providing a connecting member. The portion between the lower support plate 20 of the fixed frame 18 and the connecting plate 40 is surrounded by a cover 41 in the form of a rectangular tube and fixed at its lower portion to the lower support plate 20, whereas the cover is not shown in FIG. 4. The connecting plate 40 is formed with a hole 42 corresponding to the drive pin 28b and holes 43 corresponding to the respective driven pins 37b. A bearing housing 44 fixed to the lower side of the connecting plate 40 around the hole 42 has an antifriction bearing 45 rotatably supporting the driven pin 28b. Bearing housings 46 fixed to the lower side of the connecting plate 40 around the respective holes 43 have antifriction bearings 47 rotatably supporting the respective driven pins 37b. When drivingly rotated as described above, the drive crank 28 eccentrically rotates the vessel stand 38 about the axis A of rotation and axes of the driven shafts.

A plurality of reaction vessels 48, such as test tubes, are stowed in the reaction vessel stand 38. As shown in detail in FIG. 7, the stand 38 comprises a horizontal base 49 and a box 51 fixedly mounted on the base 49 by a plurality of spacers 50. The box 51 comprises an outer case 52, inner case 53, upper and lower two holder support plates 54, 55, fixed frame 56 and a plurality of (100 in this embodiment) aluminum vessel holders 57. The upper support plate 54 is a heat insulator.

Each of the cases 52, 53 is in the form of a rectangular parallelepipedal box which is open at the upper side. The inner case 53 is slightly smaller than the outer case 52 and disposed inside the outer case 52 with a small spacing provided therebetween. A bottom wall 53a of the inner case 53 and a bottom wall 52a of the outer case 52 which are vertically spaced apart by a distance are fixed to the connecting plate 40 by the spacers 50. The outer case 52 is formed at its upper end with a horizontal outer flange 52b, and a depending wall 52c extends downward from the outer edge of the flange 52b at a right angle therewith. The inner case 53 has a flange 53b extending horizontally outward from its upper end above the flange 52b of the outer case 52. A rectangular heat insulator 58 is sandwiched between these flanges 52b, 53b. The support plates 54, 55, which are rectangular, are arranged in layers and have their outer peripheral portions placed on the flange 53b of the inner case 53. The fixed frame 56 is rectangular and has an outer peripheral horizontal wall 56a and a depending wall 56b extending downward from the outer edge of the wall 56a at a right angle therewith. The depending wall 56b of the fixed frame 56 has a lower portion fixed to the outer surface of the depending wall 52c of the outer case 52. Held between the horizontal wall 56a of the fixed frame 56 and the flange 52b of the outer case 52 are the outer peripheral portions of the upper and lower support plates 54, 55, the flange 53b of the inner case 53 and the heat insulator 58. A heat insulator 150 is provided in a space inside the depending wall 56b of the fixed frame 56. A heat insulator 59 is also provided in the space between the two cases 52, 53.

The portion of the upper support plate 54 inwardly of the fixed frame 56 and the inner case 53 is formed with circular bores 60 in widthwise and lengthwise rows (in ten widthwise (forward or rearward) rows and ten lengthwise (leftward or rightward) rows in this embodiment) as equidistantly spaced apart. The lower support plate 55 is formed with stepped circular bores 61 immediately below the respective bores 60. The bores 61 each have a lower portion slightly greater than the bore 60 in the upper plate 54 in diameter and an upper portion slightly greater than the lower portion in diameter. The vessel holder 57 is in the form of a hollow cylinder having a bottom, an open upper end and a flange 57a slightly projecting outward from the edge of the upper end. The portion of flange 57a of the holder 57 is loosely fitted in the upper large-diameter portion of bore 61 of the lower support plate 55, the portion of the holder 57 immediately below the flange 57a is intimately fitted in the lower small-diameter portion of the bore 61, and the portion of flange 57a is held between the intermediate stepped portion of bore 61 of the lower plate 55 and the peripheral edge of bored portion 60 of the upper support plate 54, whereby the upper portion of the holder 57 is secured to the support plates 54, 55. The inside diameter of the holder 57 is slightly smaller than the diameter of the bore 60 in the upper plate 54. The reaction vessel 48 is inserted in the holder 57 through the bore 60 of the upper plate 54 and has an upper portion projecting upward from the box 51. The reaction vessel 48 is a disposable container of glass or plastic, tightly fitted in the holder 57 and immovable relative to the holder 57.

Of the holders 57 and the reaction vessels 48 in ten widthwise rows and ten lengthwise rows in the vessel stand 38, the thirty holders or vessels in the three rows at the right end (first to third rows from the right end) will be referred to as the first group, the thirty holders or vessels in the three rows (fourth to sixth rows from the right end) at the left of and adjacent to the first group as the second group, and the thirty holders or vessels in the three rows (seventh to ninth rows from the right end) further at the left of and adjacent to the second group as the third group.

Provided around the holders 57 within the inner case 53 is a heat medium circulation space 62 closed with the lower support plate 55 and the holders 57. Two hose connectors 63, 64 communicating with the space 62 are secured to a side wall of the box 51. A heat medium supply hose 65 is joined to one of the connectors, 63, and a heat medium discharge hose 66 to the other connector 64. These hoses 65, 66 are connected to an unillustrated temperature controller for circulating a heat medium through the space 62 of the box 51 to heat or cool the reaction vessels 48 in the holders 57.

The center of gravity of the reaction vessel stand 38 is positioned on the axis B of the drive pin 28b. Accordingly, the center of gravity G0 of the vessel stand 38 is positioned at a horizontal eccentricity distance $a$ from the axis A of rotation. Suppose the vessel stand 38 has an overall weight of M0.

Eccentric balancers 67, 68 constituting balance means are secured respectively to upper and lower two portions of drive shaft 28a of the drive crank 28. More specifically, a balancer of first kind (first balancer) 67 is secured to the drive shaft 28a at the portion thereof between the bearing housing 24 beneath the upper support plate 19 and the bearing housing 25 on the lower support plate 20. A balancer of second kind (second balancer) 68 is secured to the drive shaft 28a at the lower end thereof projecting downward below the pulley 31. The first balancer 67 has a center of gravity G1 positioned at the opposite side (rear side in the illustrated state) of the position of the center of gravity G0 of the vessel stand 38 with respect to the axis A of rotation. The second balancer 68 has a center of gravity G2 positioned at the same side (front side in the illustrated state) as the position of the center of gravity G0 of the vessel stand 38 with respect to the axis A of rotation. The center of gravity G1 of the first balancer 67 is positioned at a horizontal eccentricity distance R1 from the axis A of rotation. The center of gravity G2 of the second balancer 68 is positioned at a horizontal eccentricity distance R2 from the axis A of rotation. The vertical distance of the position of the center of gravity G1 of the first balancer 67 from the position of the center of gravity G0 of the vessel stand 38 is L1, and the vertical distance of the position of the center of gravity G2 of the second balancer 68 from the position of the center of gravity G1 of the first balancer 67 is L2. Suppose the first balancer 67 has a weight of M1, and the second balancer 68 a weight of M2.

The balancers 67, 68 reduce the resultant force of centrifugal forces acting on the portion including the reaction vessel stand 38 and the balancers 67, 68 combined therewith (hereinafter referred to as the "main rotating portion") during rotation and a resultant bending moment due to the centrifugal forces, diminishing the imbalance of static forces due to the centrifugal forces acting on the main rotating portion during rotation and the imbalance of bending moments due to the centrifugal forces, and suppressing the vibration due to the eccentricity of the position of the center of gravity G0 of the vessel stand 38 relative to the axis A of rotation. It is desired to minimize the resultant force of centrifugal forces acting on the main rotating portion during rotation and the resultant bending moment due to the centrifugal forces and eliminate almost completely the imbalance of static forces due to the centrifugal forces acting on the main rotating portion during rotation and the imbalance of bending moments due to the centrifugal forces. To reduce the resultant force of centrifugal forces acting on the main rotating portion during rotation and the resultant bending moment due to the centrifugal forces, P and Q represented by Equations (1) and (2) given below are adjusted to be within a predetermined range containing 1.

$$P = M1 \times R1/(M0 \times a + M2 \times R2) \qquad (1)$$

$$Q = M0 \times a \times L1/M2 \times R2 \times L2 \qquad (2)$$

Preferably P is in the range of $1 \pm 0.2$, and Q is in the range of $1 \pm 0.2$, more preferably P is in the range of $1 \pm 0.1$ and Q of $1 \pm 0.1$, and most preferably P is in the range of $1 \pm 0.05$ and Q of $1 \pm 0.05$. Especially in the case of high-speed rotation, for example, of at least 1000 rpm, it is desired that each of P and Q be about $1 \pm 0.05$. For example, when M0 is 10.757 kg and $a$ is 2 mm, P becomes 1.02 and Q becomes 0.99, if M1 is 1.133 kg, M2 is 0.687 kg, R1 is 48.5 mm, R2 is 47.3 mm, L1 is 90 mm and L2 is 60 mm. Suppressed vibration then resulted even at a rotational speed of 1000 rpm.

Assuming that the angular velocity of rotation of the drive crank 28 is ω, the centrifugal force F0 acting on the vessel stand 38, the centrifugal farce F1 acting on the first balancer 67 and the centrifugal force F2 acting on the second balancer 68 during rotation are expressed respectively by Equations (3) to (5) given below.

$$F0 = M0 \times a \times \omega^2 \qquad (3)$$

$$F1 = M1 \times R1 \times \omega^2 \qquad (4)$$

$$F2 = M2 \times R2 \times \omega^2 \qquad (5)$$

In view of the direction of eccentricity of the vessel stand 38 and the balancers 67, 68 relative to the axis A of rotation, F0 and F2 are in the same direction, and F1 is in opposite direction to these forces. Accordingly, the resultant of the centrifugal forces acting on the main rotation portion during rotation is zero when Equation (6) given below is satisfied. The resultant bending moment due to the centrifugal forces acting on the main rotating portion during rotation is zero when Equation (7) given below is established.

$$F1 = F0 + F2 \qquad (6)$$

$$F0 \times L1 = F2 \times L2 \qquad (7)$$

Substitution of F0, F1 and F2 of Equations (3) to (5) in Equations (6) and (7) affords Equations (8) and (9) given below.

$$M1 \times R1 = M0 \times \underline{a} + M2 \times R2 \qquad (8)$$

$$M0 \times \underline{a} \times L1 = M2 \times R2 \times L2 \qquad (9)$$

The angular velocity of rotation $\omega$ is not included in Equations (8) and (9). When Equation (8) holds true, P of Equation (1) is 1, while when Equation (9) is satisfied, Q of Equation (2) is 1. Accordingly by arranging the balancers 67, 68 so that P and Q each will be 1, the resultant force of centrifugal forces acting on the main rotating portion during rotation and the resultant bending moment due to the centrifugal forces can be reduced to zero theoretically regardless of the speed of rotation to eliminate the imbalance of static forces and the imbalance of bending moments. Further by arranging the balancers 67, 68 so that P and Q each will be within a predetermined range containing 1, the resultant force of centrifugal forces acting on the main rotating portion during rotation and the resultant bending moment due to the centrifugal forces can be reduced to diminish the imbalance of static forces and the imbalance of bending moments.

According to the embodiment described, the resultant force of centrifugal forces acting on the main rotating portion during rotation and the resultant bending moment due to the centrifugal forces can be reduced, for example, almost to zero merely by arranging the two balanceres 67, 68 on the drive shaft 28a to diminish the imbalance of static forces due to the centrifugal forces and the imbalance of bending moments due to the centrifugal forces and thereby ensure suppressed vibration.

Although the embodiment described has one balancer 67 of first kind and one balancer 68 of second kind, at least two balancers of each kind may be provided.

At least one balancer 67 of first kind is provided eccentrically at the opposite side of the reaction vessel stand 38 with respect to the axis A of rotation, and at least one balancer 68 of second kind is disposed eccentrically at the same side as the vessel stand 38 with respect to the axis A, whereby the resultant force of centrifugal forces acting on the main rotating portion during rotation and the resultant bending moment due to the centrifugal forces can be reduced, for example, almost to zero to diminish the imbalance of static forces due to the centrifugal forces and the imbalance of bending moments due to the centrifugal forces and thereby ensure suppressed vibration.

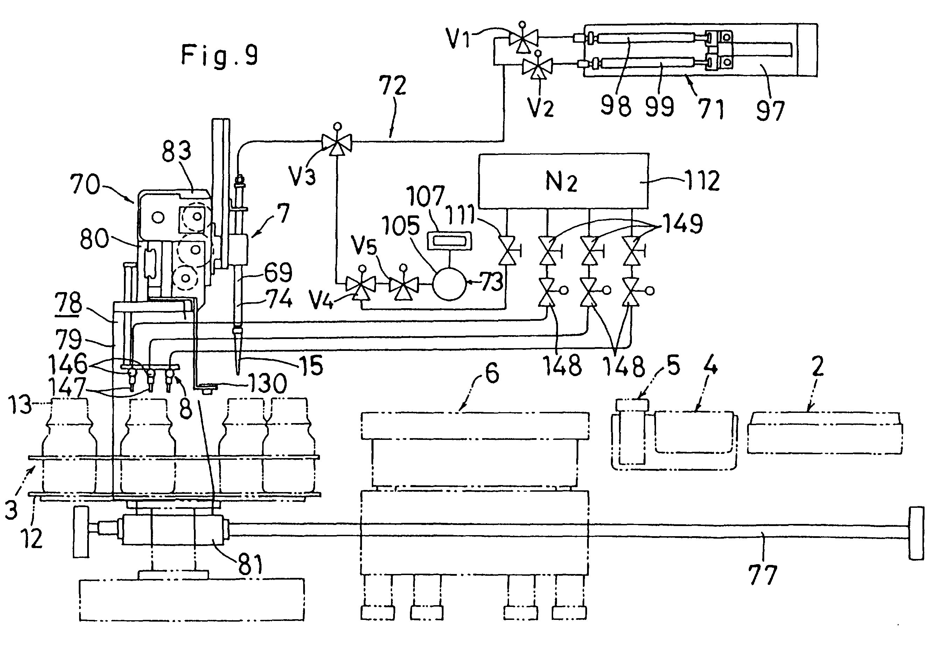

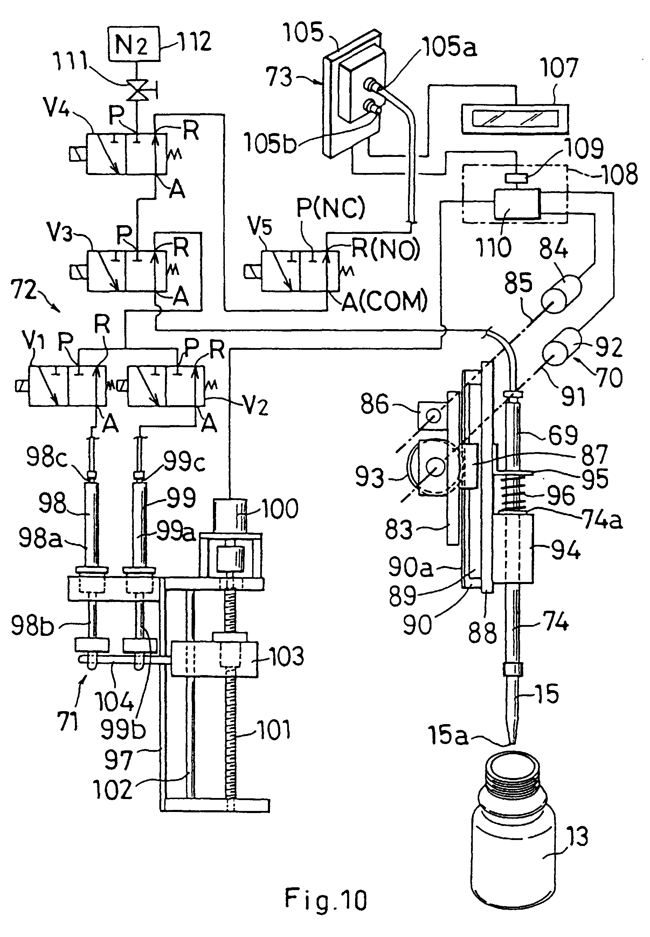

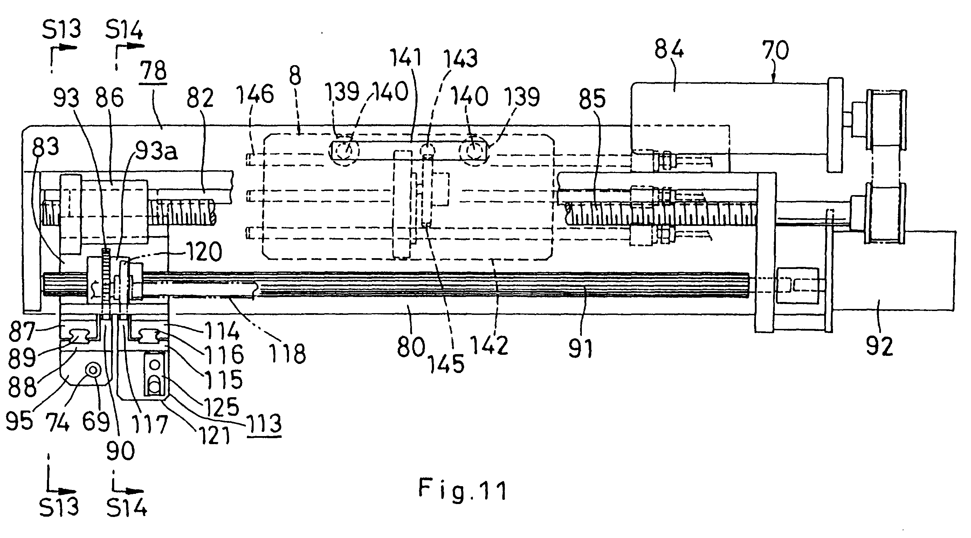

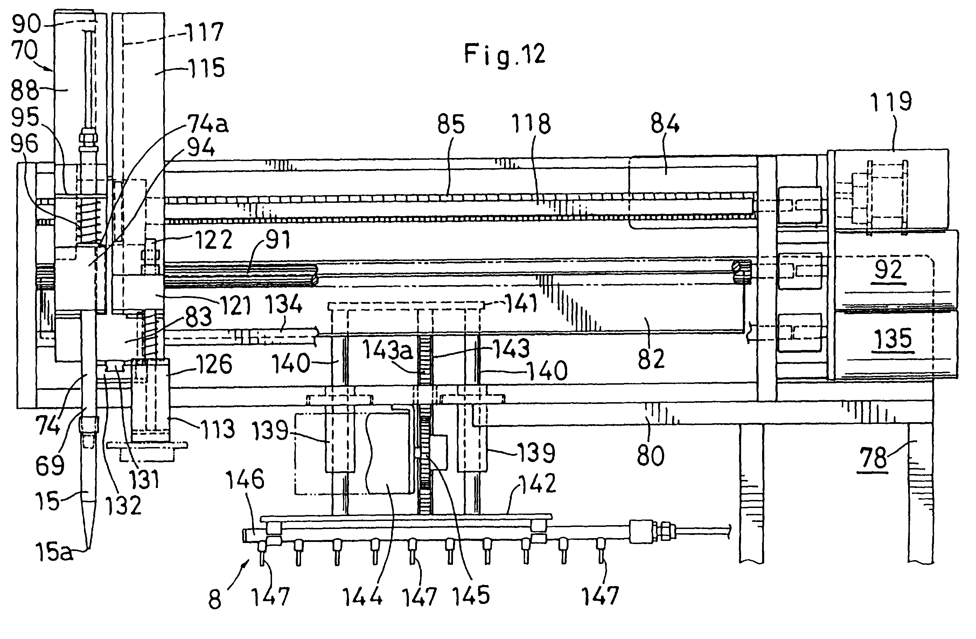

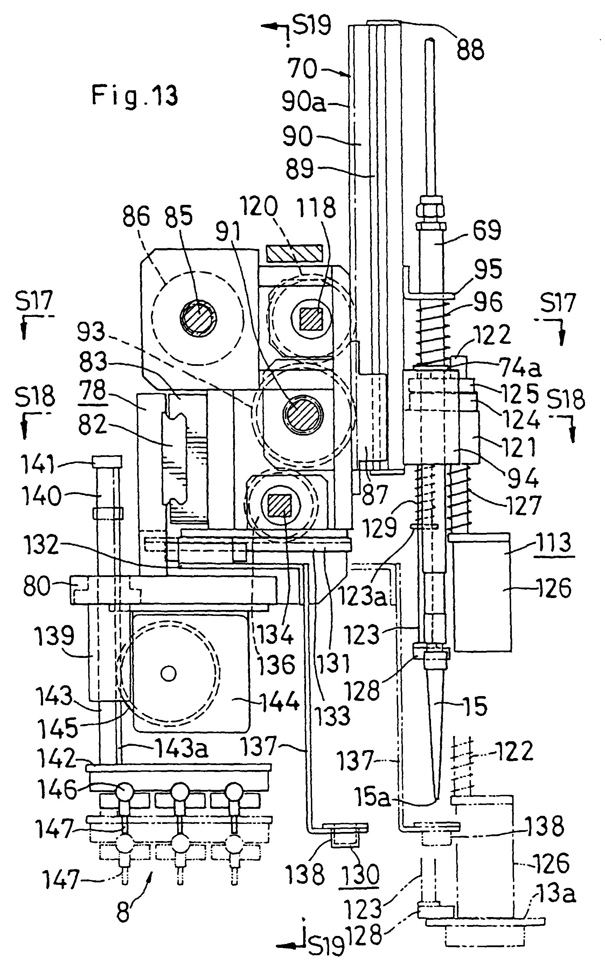

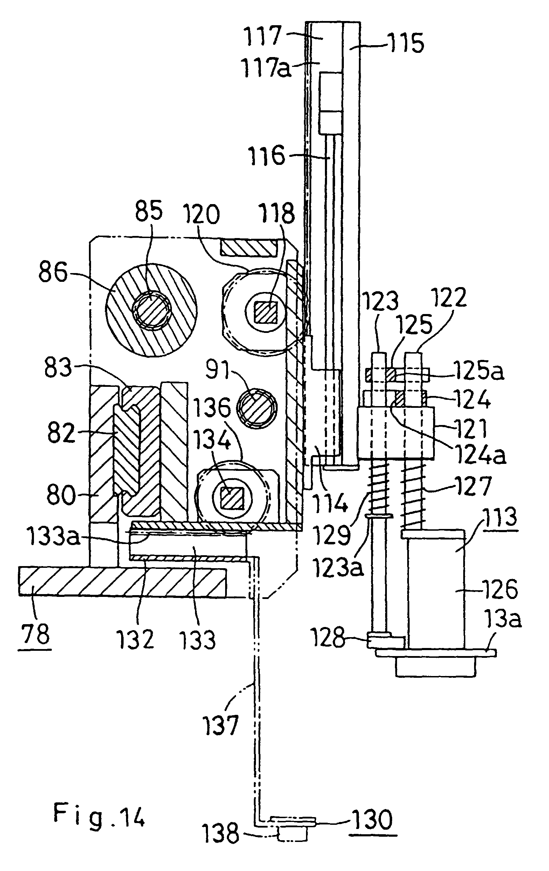

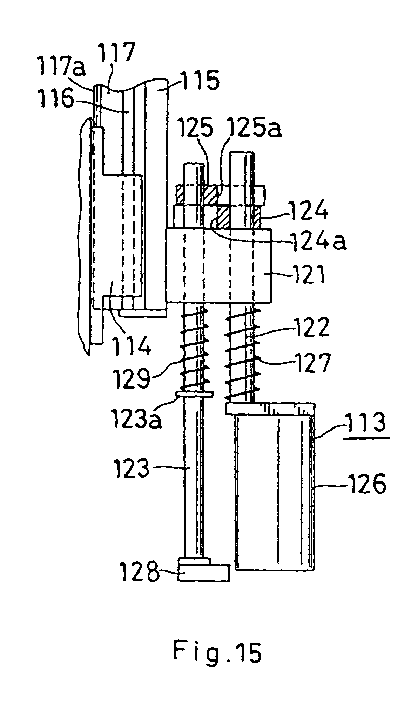

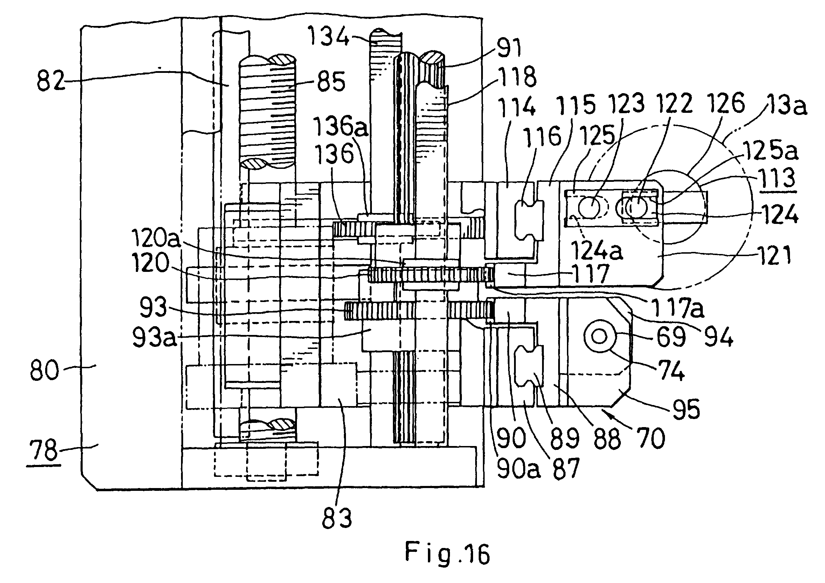

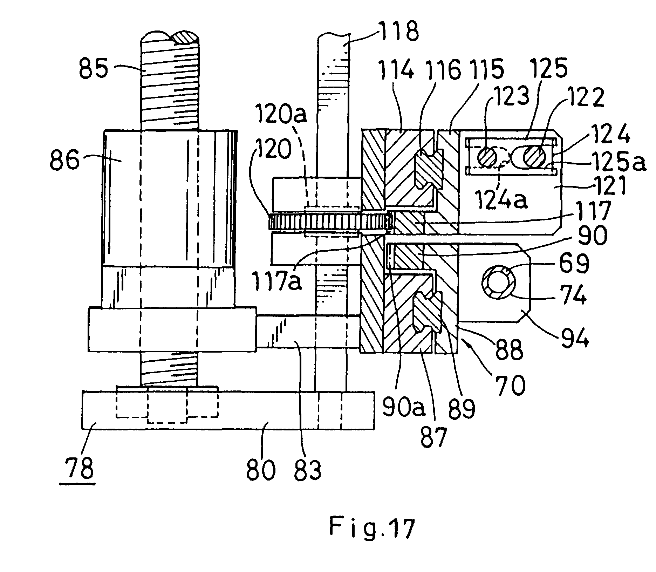

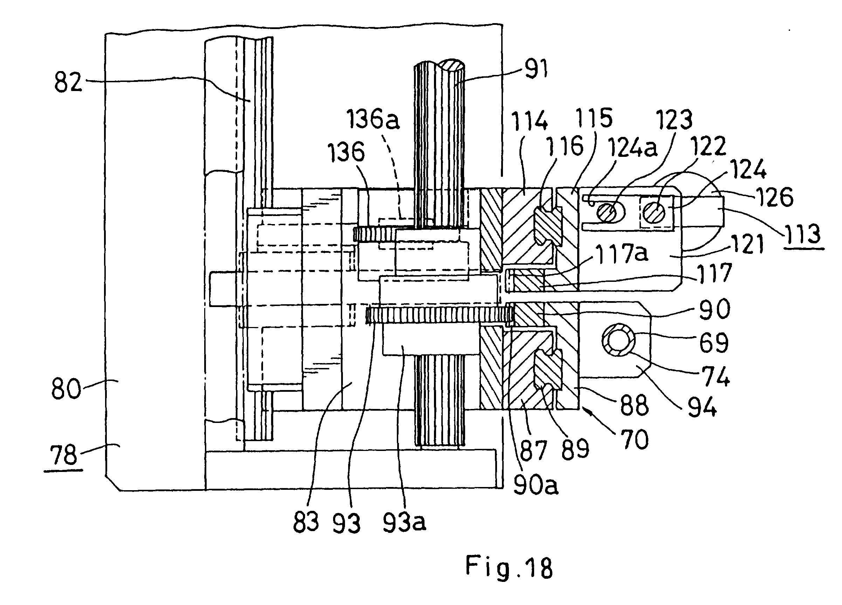

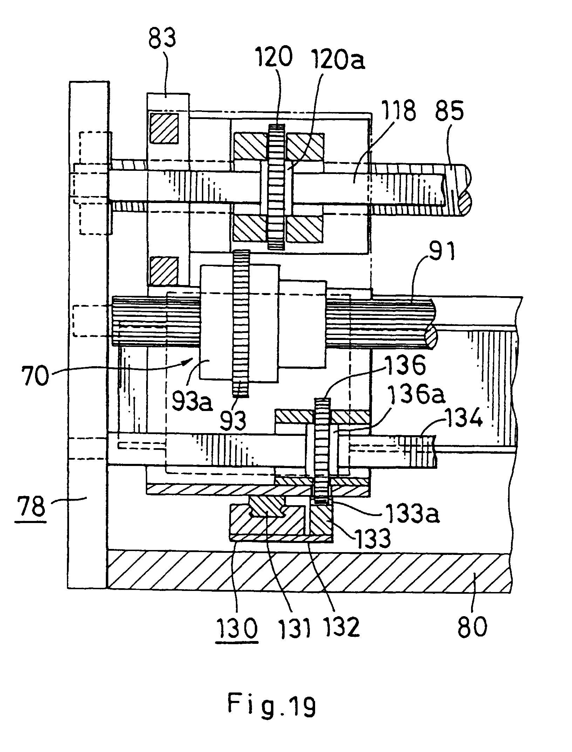

The overall construction of the pipetting device 7 is shown in FIG. 9, and the construction of the main portion thereof in FIG. 10. The components of the pipetting device 7 are shown in detail in FIGS. 11 to 20.

The pipetting device 7 comprises a vertical tubular nozzle 69, nozzle drive unit 70, pressure supply unit 71, channel 72 holding the nozzle 69 in communication with the pressure supply unit 71 and liquid surface sensor unit 73.

The nozzle 69 comprises a tubular nozzle base portion 74 elongated vertically, and the above-mentioned disposable nozzle tip 15 in the form of a tube and removably fittable to the lower end of the base portion. Known means are usable as a mechanism for attaching the nozzle tip 15 to the base portion 74 and removing the tip therefrom, means for removing the nozzle tip 15 at the nozzle tip disposal portion 5, and nozzle tip fitting means at the nozzle tip holder 4, so that these means will not be described in detail. The nozzle tip 15 has a tapered lower portion formed with a liquid inlet-outlet opening (hereinafter referred to as the "suction opening") 15a at its lower end. The nozzle tip 15 is preferably 0.3 to 1.5 mm in inside diameter. The diameter is 0.8 mm in this embodiment. It is desired that the end face, and at least the inner of the inner and outer peripheral surfaces of the lower end portion of the nozzle tip 15 be coated with a nonadhesive resin, such as ethylene tetrafluoride resin or like fluorocarbon resin, or silicone resin.

The nozzle drive unit 70 provides nozzle drive means for moving the nozzle 69 in three-dimensional directions, i.e., leftward, rightward, forward, rearward, upward and downward directions, and has the following construction.

A guide rail 75 extending horizontally in the left-right direction is disposed at a rear-end lower portion of the interior of the case 1. A ball screw 77 drivable by an electric motor 76 is disposed slightly above the rail 75 in parallel thereto. Supported on the guide rail 75 is a body (first movable body) 78 movable leftward or rightward by the rotation of the ball screw 77. The first movable body 78, which is inverted L-shaped, comprises a vertical support 79 and a beam 80 secured to the upper end of the post 79 and extending horizontally forward. A guide block 81 secured to the lower end of the support 79 is slidably supported by the guide rail 75, and a ball nut (not shown) fixed to the block 81 is fitted around the ball screw 77.

A guide rail 82 extending horizontally in the front-rear direction is secured to the left side portion of the beam 80 of the first movable body 78. A body (second movable body) 83 is slidably supported by the right side of the guide rail 82 so as to be slidable in the front-rear direction. A ball screw 85 drivable by an electric motor 84 is disposed on a portion of the beam 80 above the guide rail 82 in parallel thereto. A ball nut 86 secured to the second movable body 83 is fitted around the ball screw 85. The second movable body 83 is movable forward or rearward along the beam 80 by the rotation of the ball screw 85.

A guide block 87 is secured to a right-side front portion of the second movable body 83. A vertically elongated lift member (first lift member) 88 is supported by the block 87 upwardly and downwardly movably. A guide rail 89 extending vertically is secured to a front left side portion of the first lift member 88 and is supported by the guide block 87 vertically slidably. A rack 90 extending vertically is secured to a rear-side left portion of the first lift member 88, and the left side face of the rack 90 is toothed as at 90a. The beam 80 of the first movable body 78 is provided with a spline shaft 91 extending horizontally in the front-rear direction, and an electric motor 92 for driving the shaft. A pinion 93 has a boss 93a rotatably supported by the second movable body 83. The spline shaft 91 is inserted through a ball spline sleeve (not shown) secured to the center of the boss 93a, whereby the pinion 93 and the spline shaft 91 are made movable relative to each other in an axial direction (forward or rearward) while being prevented from rotating relative to each other. The pinion 93 is in mesh with teeth 90a of the rack 90 of the first lift member 88. When the second movable body 83 moves forward or rearward along the beam 80, the pinion 93 also moves forward or rearward with the body 83 along the spline shaft 91. Regardless of the position of the second movable body 83 in the front-rear direction, the pinion 93 is drivingly rotatably by driving the spline shaft 91 by the motor 92, permitting the first lift member 88 to move upward or downward with the rack 90 meshing with the pinion. A guide block 94 is secured to the right-side lower portion of the first lift member 88. The nozzle base portion 74 is vertically movably inserted through a direct-acting ball bearing (not shown) provided inside the guide block 94. The nozzle base portion 74 has a flange 74a formed at a part thereof projecting upward beyond the guide block 94. A spring retainer 95 in the form of a horizontal plate is secured to the right side face of the first lift member 88 and positioned above the flange 74a. A compression coil spring 96 is provided around the nozzle base portion 74 between the spring retainer 95 and the flange 74a for biasing the nozzle base portion 74 downward. The spring 96 serves to absorb the impact produced when the nozzle tip 15 is fitted to the nozzle, base portion 74. Usually the nozzle 69 is held in a specified lower limit position relative to the first lift member 88, with the flange 74a of the nozzle base portion 74 pressed in contact with the upper face of the guide block 94 by the spring 96. The nozzle 69 moves upward or downward with the first lift member 88 relative to the second movable body 83.

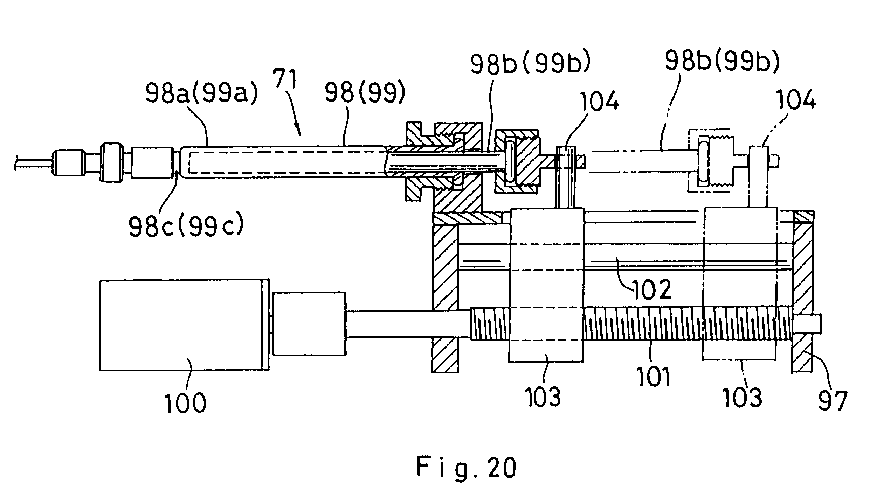

The pressure supply unit 71 constitutes means for supplying a positive pressure and negative pressure to the nozzle 69. FIG. 20 shows the unit 71 in detail.

A frame 97 is fixed to a top wall 1c of the case 1 at a rear-end right portion thereof. The frame 97 is provided with upper and lower two syringe pumps 98, 99 extending horizontally in the left-right direction, a ball screw 101 extending horizontally in the left-right direction and drivingly rotatable by an electric motor 100, and a movable member 103 movable leftward or rightward along a horizontal guide rod 102 by the rotation of the ball screw 101. Each of the pumps 98, 99 comprises a barrel 98a (99a) fixed to the frame 97 and a piston rod 98b (99b) inserted in the barrel 98a (99a) from the right side thereof. The left ends of the barrels 98a, 99a serve as air supply-discharge openings 98c, 99c. The piston rods 98b, 99b each have a right end connected by a connecting member 104 to the movable member 103. The movement of the movable member 103 over a predetermined range strokes each piston rod 98b (99b) relative to the barrel 98a (99a) a predetermined distance. In accordance with the quantity of liquid to be transferred, one of the two pumps 98, 99 is alternatively used suitably. For example, the first syringe pump 98 is 2.30 mm and the second syringe pump 99 is 7.28 mm in inside diameter. The piston rods 98b, 99b of the two pumps 98, 99 are 60 mm in full stroke length.

FIG. 10 shows the constructions of the channel 72 and the liquid surface sensor unit 73. Incidentally, FIG. 10 shows the syringe pumps 98, 99 with its actual left side up. The channel 72 has three solenoid valves V1, V2, V3. The liquid surface sensor unit 73 detects the liquid surface by detecting that the lower-end suction opening 15a of the nozzle tip 15 has reached the liquid surface, and has two solenoid valves V4, V5 and a fine differential pressure sensor 105. These valves V1 to V5 and the fine differential pressure sensor 105 are arranged in a case 106 disposed at the left of the pressure supply unit 71 and attached to the top wall 1c of the case 1 inside thereof.

The five valves V1 to V5 are all diaphragm-type direct operated three-port two-position valves. The drawing shows the diaphragm-type three-port solenoid valve using flow channel symbols for the pneumatic three-port solenoid valve of JIS B8374. The outlet port A, inlet port P and vent port R shown correspond respectively to COM (common) port, NC (normally closed) port and NO (normally open) port of the diaphragm-type direct operated three-port valve. In connection with the valves V1 to V5, the unenergized state will be referred to as "off state," and the energized state as "on state." When the valves V1 to V5 are in off state, the outlet port A (COM port) is in communication with the vent port R (NO port) and held out of communication with the inlet port P (NC port). When the valves are in on state, the outlet portion A is in communication with the inlet port P and held out of communication with the vent port R.

The fine differential pressure sensor 105 constitutes differential pressure sensor means for detecting the pressure difference between the atmospheric pressure and the internal pressure of the nozzle 69 and the channel 72 communicating therewith. The sensor 105 detects the pressure difference between a + side pressure port (hereinafter referred to as "+ port") 105a and a - side pressure port (hereinafter referred to as "- port"), showing the detected value (digital value) on a display 107 and feeding the value to a controller 108. Preferably, the fine differential pressure sensor 105 is at least 30 mm $H_2O$ in full scale and up to 2 mm $H_2O$ in resolution. The sensor 105 to be used is, for example, a semiconductor diffusion-type fine differential pressure sensor, SCXL004DN, manufactured by Korne Co., Ltd. This sensor is 100 mm $H_2O$ in full scale, 1 mm $H_2O$ in resolution, $\pm 2$ mm $H_2O$ in reproducibility and 250 mm $H_2O$ in overload pressure resistance.

The controller 108 controls the motors 76, 84, 92, 100, valves V1 to V5, etc. according to the output of the sensor 105. The processing operation to be performed by the controller 108 is conducted using, for example, a microcomputer. In function, the controller 108 comprises a liquid surface detector 109 and a drive control 110. The detector 109 serves as a portion of the liquid surface sensor unit 73, constituting detector means for detecting that the suction opening 15a of the nozzle tip 15 has reached the liquid surface by an increase in the output (pressure difference) of the sensor 105 over a predetermined value of detection. The drive control 110 controls the motor 76, 84, 92, 100, valves V1 to V5, etc. based on the result of detection by the detector 109.

The outlet port A of the first valve V1 communicates with the supply-discharge opening 98c of the first syringe pump 98, and the outlet port A of the second valve V2 with the supply-discharge opening 99c of the second syringe pump 99. The inlet ports P of these valves V1, V2 are in communication with the vent port R of the third valve V3. The vent ports R of the first and second valves V1, V2 are opened to the atmosphere. The outlet port A of the third valve V3 communicates with the upper end of the nozzle base portion 74. The first valve V1 (or the second valve V2) is turned on with the third valve V3 in off state, and the piston rods 98b, 99b of the syringe pumps 98, 99 are lowered, whereby air is drawn out of the nozzle 69 into the barrel 98a of the first syringe pump 98 (or into the barrel 99a of the second syringe pump 99) to supply a negative pressure to the nozzle 69. Conversely, air is drawn out of the barrel 98a of the first syringe pump 98 (or the barrel 99a of the second syringe pump 99) into the nozzle 69 to supply a positive pressure to the nozzle 69.

The inlet port P of the third valve V3 is in communication with the outlet port A of the fourth valve V4, and the inlet port P of the fourth valve V4 is in communication with a nitrogen supply device 112 via a manual on-off valve 111. The on-off valve 111 is usually open. The nitrogen supply device 112 constitutes inert gas supply means for supplying an inert gas to the nozzle 69 and the channel 72 communicating therewith. The vent port R of the fourth valve V4 communicates with the outlet port A of the fifth valve V5, and the vent port R of the fifth valve V5 is in communication with the + port 105a of the fine differential pressure sensor 105. The inlet port P of the fifth valve V5 and the - port 105b of the sensor 105 are opened to the atmosphere.

The pipetting device 7 is provided with a container lid removing-fitting device 113 for removing the lid 13a when the solvent is sucked into the nozzle 69 from the solvent container 13. The device 113 has the following construction.

A guide block 114 is fixed to a right-side rear portion of the second movable body 83, and a vertically elongated lift member (second lift member) 115 is supported by the block 114 upwardly and downwardly movably. A vertically extending guide rail 116 is fixed to the left side of rear portion of the second lift member 115 and supported by the guide block 114 upwardly and downwardly slidably. A rack 117 extending vertically is secured to the left side of rear portion of the second lift member 115, and the left side face of the rack 117 is toothed as at 117a. The beam 80 of the first movable body 78 is provided with a drive shaft 118 having a square cross section and extending horizontally in the front-rear direction, and an electric motor 119 for driving the shaft. A pinion 120 has a boss 120a rotatably supported on the second movable body 83. The drive shaft 118 is inserted through the center of the boss 120a. Although not rotatable relative to each other, the pinion 120 and the drive shaft 118 are movable relative to each other axially thereof (in the front-rear direction). The pinion 120 is in mesh with teeth 117a of the rack 117 of the second lift member 115. When the second movable body 83 moves forward or rearward along the beam 80, the pinion 120 also moves forward or rearward along the drive shaft 118 with this movement. Regardless of the position of the second movable body 83 with respect to the front-rear direction, the pinion 120 is drivingly rotated by drivingly rotating the drive shaft 118 by the motor 119, moving the second lift member 115 with the rack 117 which is in mesh with the pinion.

A guide block 121 is secured to a right-side lower portion of the second lift member 115. An electromagnet support rod 122 vertically movably extends through a direct-acting ball bearing (not shown) which is provided in a bore vertically extending through a right portion of the guide block 121. A push rod 123 similarly extends through a direct-acting ball bearing (not shown) which is provided in a bore vertically extending through a left portion of the block 121. A first stopper 124 horizontally extending leftward has a base end portion secured to the support rod 122 at the portion thereof projecting upward from the guide block 121. The left end of the stopper 124 is U-shaped to a bifurcated form by cutting out, and the push rod 123 is vertically movably fitted in the cutout portion 124a. A second stopper 125 extending horizontally rightward has a base end portion secured to the push rod 123 at the portion thereof projecting upward beyond the first stopper 124. The right end of the second stopper 125 is U-shaped to a bifurcated form by cutting out, and the portion of the support rod 122 above the first stopper 124 is vertically movably fitted in the cutout portion 125a. An electromagnet 126 in the form of a vertical solid cylinder is secured to the lower end of the support rod 122, as positioned rightward eccentrically thereof. A compression coil spring 127 is provided around the support rod 122 between the top of the electromagnet 126 and the bottom of the guide block 121 for biasing the support rod 122 and the magnet 126 downward. The electromagnet 126 is usually held in a lower limit position wherein the first stopper 124 is pressed in contact with the upper surface of the guide block 121 by the spring 127. The push rod 123 is provided with a press member 128 at its lower end, and a flange 123a is formed on the push rod 123 at the portion thereof between the press member 128 and the guide block 121. A compression coil spring 129 is provided around the rod 123 at the portion thereof between the flange 123a and the bottom of the guide block 121 for biasing the push rod 123 downward. The push rod 123 is usually held in a lower limit position wherein the second stopper 125 is pressed against the first stopper 124 by the spring 129. The support rod 122, electromagnet 126 and push rod 123 are movable upward or downward along with the second lift member 115. With the second stopper 125 thus in intimate contact with the upper surface of the first stopper 124, the bottom face of the press member 128 is positioned slightly below the bottom face of the electromagnet 126.

The pipetting device 7 further has a liquid receiver 130. If a liquid drips from the nozzle 69, the receiver 130 receives the liquid, preventing the liquid from dripping onto other portions. The liquid receiver has the following construction.

A guide rail 131 extending horizontally in the left-right direction is disposed at a lower portion of the second movable body 83 at the left of the nozzle 69. Supported by the lower side of the rail 131 is a movable member (third movable member) 132 which is movable leftward or rightward. A rack 133 extending horizontally in the left-right direction is secured to the rear portion of the third movable member 132 and has an upper face formed with teeth 133a. The beam 80 of the first movable body 78 is provided at a lower portion thereof with a drive shaft 134 having a square cross section and extending horizontally in the front-rear direction, and an electric motor 135 for driving the shaft 134. A pinion 136 has a boss 136a rotatably supported by a lower portion of the second movable body 83. The drive shaft 134 extends through the center of the boss 136a and is movable axially thereof (forward or rearward) relative to the pinion 136 although not rotatable relative thereto. The pinion 136 is in mesh with teeth 133a of the rack 133 of the third movable body 132. When the second movable body 83 moves forward or rearward along the beam 80, the pinion 136 also moves therewith forward or rearward along the drive shaft 134. Regardless of the position of the second movable body 83 with respect to the front-rear direction, the pinion 136 is drivingly rotated by driving the shaft 134 by the motor 135, moving the third movable body 132 leftward or rightward along with the rack 133 meshing with the pinion.

The third movable body 132 has fixed to its right end the upper end of a platelike arm 137 extending downward. The arm 137 has a lower end portion bent rightward at a right angle. A liquid receiving receptacle 138 is attached to this portion. With the movement of the third movable body 132, the receptacle 138 is moved between a rightward limit position, i.e., operative position, immediately below the nozzle 69 in its upper limit position and a leftward limit position, i.e., standby position.

The reaction mixture concentrating device 8 has the following construction.

A pair of front and rear vertical direct-acting bearings 139 are attached to the beam 80 of the first movable body 78 at the lower part of its approximate midportion with respect to the front-rear direction. Two lift rods 140 are inserted through the respective bearings. A horizontal connecting bar 141 is secured at its front and rear ends to the upper ends of the lift rods 140, and a horizontal frame 142 is secured at two left side portion thereof to the lower ends of the rods, whereby the two lift rods 140 are interconnected. A vertical rack 143 is connected between an intermediate portion, with respect to the front-rear direction, of the bar 141 and a similarly intermediate, left-side portion of the support frame 142. The rack 143 has a right side face which is toothed as at 143a. The beam 80 carries at a lower portion thereof a pinion 145 which is rotatable by an electric motor 144 about a horizontal axis in the front-rear direction. The pinion 145 is in mesh with teeth 143a of the rack 143. When drivingly rotated by the motor 144, the pinion 145 moves the lift rods 140 and the support frame 142 upward or downward along with the rack 143 meshing with the pinion.

The support frame 142 is provided at its bottom with three distributing pipes 146 extending horizontally in the front-rear direction. Each of the pipes 146 is fixedly provided at its bottom with ten nozzles 147 directed downward and arranged at a spacing in the same direction. These thirty nozzles 147 are positioned in corresponding relationship with the reaction vessels 48 held by one group of thirty vessel holders 57 of the rotary shaker 6. Thus, with respect to the front-rear direction, the nozzles 147 are positioned in match with the reaction vessels 48 as arranged in the same direction and held by the holders 57 of the vessel stand 38 in the home position of the rotary shaker 6. In the left-right direction, the nozzles 147 are spaced apart by the same distance as the reaction vessels 48. Each distributing pipe 146 is connected to the nitrogen supply device 112 by way of a solenoid-operated on-off valve 148 and a manual on-off valve 149. These manual on-off valves 149 are usually open.

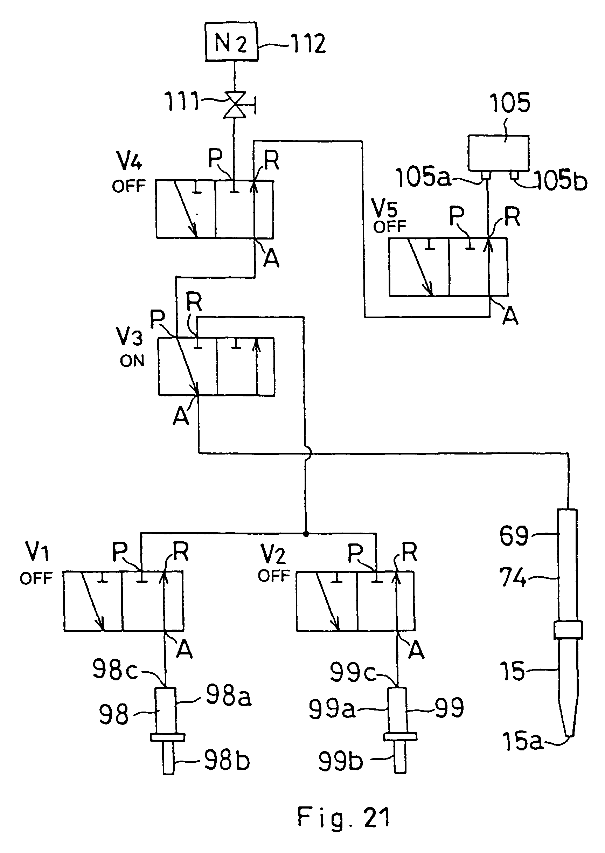

FIGS. 21 to 24 show the changed-over states of the valves V1 to V5 of the channel 72 and the liquid surface sensor unit 73 of the pipetting device 7 in operation. With reference mainly to these drawings, a description will be given of the operation of the pipetting device 7 for transferring the liquid (solvent) in a solvent container 13 in the solvent container holder 3 to reaction vessels 48 of the rotary shaker 6. FIGS. 21 to 24 show the syringe pumps 98, 99, also with the actual left side thereof up.

First, the turntable 12 of the solvent container holder 3 is rotated and stopped at a position wherein the solvent container 13 containing the solvent to be transferred is brought to a predetermined sucking position. The motors 76, 84 are driven to move the first and second movable bodies 78, 83, and the electromagnet 126 of the container lid removing-fitting device 113 is halted at a position immediately above the solvent container 13 in the sucking position.

Next, the lid 13a of the container 13 is removed by the device 113 in the following manner. First, the motor 119 is driven, lowering the second lift member 115 of the device 113. When lowered, the lift member 115 first brings the press member 128 at the lower end of the push rod 123 into pressing contact with a portion of the container lid 13a close to the outer periphery thereof, whereupon the member 128 is halted. When the lift member 115 is further lowered, the electromagnet 126 comes into pressing contact with the central portion of the lid 13a and stops. The lift member 115 is thereafter halted. When the lift member 115 is halted, the electromagnet 126 acting against the elastic force of the spring 127 permits the first stopper 124 to be held stopped at a position slightly upwardly away from the upper surface of the guide block 121, and the push rod 123 acting against the elastic force of the spring 129 holds the second stopper 125 stopped at a position slightly upwardly away from the upper surface of the first stopper 124. When the lift member 115 is brought to a halt, the electromagnet 126 is energized, and the lift member 115 is raised to the original upper limit position. When the magnet 126 is energized and magnetized, the iron plate portion of the lid 13a is attracted to the magnet 126. When the lift member 115 is raised, the guide block 121 only moves up first and then moves up with the electromagnet 126 upon the upper surface of the guide block coming into contact with the first stopper 124. The rise of the magnet 126 also raises the lid 13a attracted thereto, removing the lid from the container 13 upward. At this time, the magnetic attraction of the electromagnet 126 is greater than the elastic force of the spring 129 on the push rod 123, consequently permitting the magnet 126, attracting the lid 13a, to rise with the push rod 123 pushed up. Incidentally, the electromagnet 126 may be energized before the descent of the second lift member 115 is started.

When the second lift member 115 is halted as raised to its upper limit position, the second movable body 83 is moved rearward, and the nozzle 69 is brought to and stopped at the sucking position immediately above the container 13. The liquid in the solvent container 13 is then sucked into the nozzle tip 15 in the following manner. With the nozzle 69 brought to the sucking position, the nozzle 69 has been raised to the upper limit position of its stroke, the piston rods 98b, 99b of the pumps 98, 99 have been raised to the upper limit position of their stroke, and the third valve V3 only is on as shown in FIG. 21. With the third valve V3 on, the interior of the nozzle 69 is in communication with the + port 105a of the fine differential pressure sensor 105. When the nozzle 69 is brought to and stopped at the sucking position, the motor 92 is driven, and the nozzle 69 starts to descend toward the liquid surface within the container 13. The nozzle 69 descends preferably at a speed of 3 to 15 mm/sec, for example, 10 mm/sec. During the descent of the nozzle 69, the detector 109 is always monitoring the output of the sensor 105, i.e., the pressure difference between the atmospheric pressure and the internal pressure of the nozzle 69 and the channel 72 communicating therewith. If the pressure difference becomes greater than the predetermined value of detection, the detector outputs a liquid surface detection signal to the drive control 110. Until the liquid surface detection signal is delivered from the detector 109, the drive control 110 holds the motor 92 in operation, causing the nozzle 69 to continuously descend, and deenergizes the motor 92 to stop the nozzle 69 upon receiving the detection signal. The predetermined value of detection is, for example, 2.5 mm $H_2O$ although suitably variable with the kind of liquid, kind of nozzle tip 15, etc. Until the lower end of the nozzle tip 15 reaches the liquid surface, the interior of the nozzle 69 is in communication with the atmosphere via the suction opening 15a, so that the output of the sensor 105 is nearly zero, and the nozzle 69 is held in descending movement, with no detection signal delivered from the detector 109.

Upon the lower end of the nozzle 69 reaching the liquid surface, the liquid ingresses into the nozzle tip 15 through the suction opening 15a by virtue of a capillary action, producing a fine variation in the volume of air layer within the nozzle 69 and the channel 72, hence a fine variation in the internal pressure. As a result, the output of the sensor 105 becomes greater than the predetermined value of detection for the detector 109 to output a liquid surface detection signal. The motor 92 is stopped to discontinue the descent of the nozzle 69. When the nozzle 69 is halted upon the detection of the liquid surface, the nozzle tip 15 is dipped into the liquid by an amount corresponding to the quantity of liquid to be sucked in, and suction of the liquid is started. In the case where the liquid is an organic solvent, such as ethyl acetate, DMA (dimethylaniline), DMF (N,N-dimethylformamide) or the like, the liquid is low in surface tension and viscosity, with the result that the liquid enters the nozzle tip 15 under a capillary action the moment the nozzle tip lower end comes into contact with the liquid surface. This makes it possible to halt the nozzle 69 with the nozzle tip 15 dipped into the liquid to a depth of approximately 0 from the liquid surface (the depth of dipping from the liquid surface will hereinafter be referred to merely as the "depth of dipping"), thereafter dip the nozzle tip 15 into the liquid by a predetermined amount and start the suction of the liquid in this state. In the case of an aqueous solution, the liquid enters the nozzle tip 15 upon the head at the position of the depth of dipping of the nozzle tip 15 overcoming the surface tension at the lower end of the nozzle tip 15. For this reason, the nozzle is halted with the nozzle tip 15 dipped into the liquid by a predetermined amount from the liquid surface. The depth of dipping at the time when the tip 15 is halted is up to about several millimeters although the depth varies, for example, with the kind of liquid or nozzle tip 15. The depth of dipping, which is dependent on the kind of liquid or nozzle tip 15, can be predetermined, so that the nozzle 69 is first halted, and thereafter dipped to the predetermined depth or dipped into the liquid by the predetermined amount after raising the nozzle 69 by a very small amount from the depth, before the start of suction of the liquid. Experiments have substantiated that when at least the inner peripheral surface of the lower end of the nozzle tip 15 is coated with a nonadhesive resin as previously stated, the depth of dipping at which the nozzle tip 15 is to be halted can be one-half smaller than in the absence of the coating in the case where the same kind of liquid or the nozzle tip 15 is used. Further if the outer peripheral surface of the lower end of the nozzle tip 15 is also coated, the liquid is less likely to adhere to the outer surface, reducing the likelihood that the adhering liquid will drip to alter the amount to be transferred.

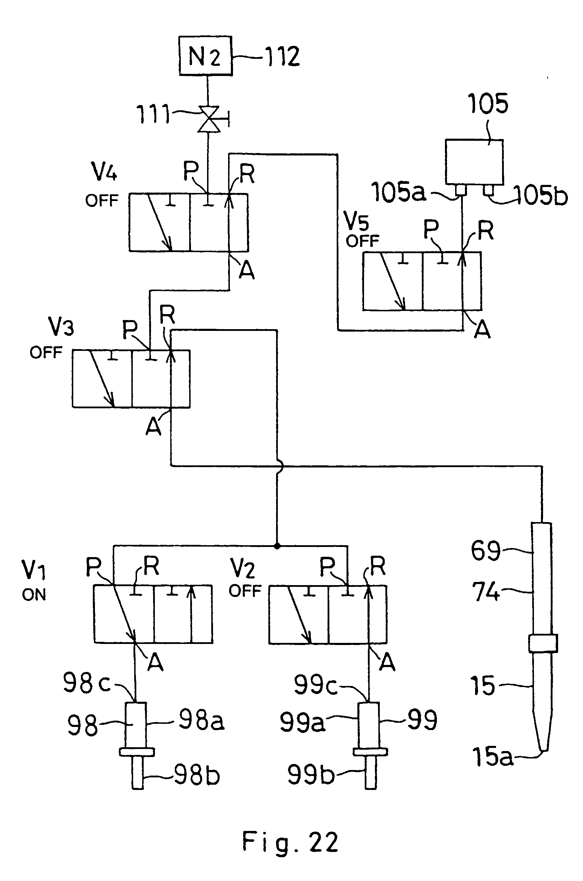

With reference to FIG. 22, the liquid is sucked in by driving the motor 100, with one of the first and second valves V1, V2 (the first valve V1 in this case) turned on and with the third valve V3 turned off, and moving the piston rods 98b, 99b of the pumps 98, 99 to the right limit position of the stroke. The on state of the first valve V1 and the off state of the third valve V3 cause the nozzle 69 to communicate with the barrel 98a of the first pump 98, and the rightward movement of the piston rod 98b supplies a negative pressure to the nozzle 69, causing the nozzle to draw the liquid in under suction. At this time, the rightward movement of the piston rod 99b of the second pump 99 also produces a negative pressure in the barrel 99a, whereas the barrel 99a is held in communication with the atmosphere via the second valve V2 in off state and therefore merely draws in the atmospheric air through the valve V2.

On completion of the suction of the liquid by the movement of the piston rods 98b, 99b of the pumps 98, 99 to the right limit position, the motor 92 is driven to raise the nozzle 69 to its upper limit position, the second movable body 83 is moved forward, and the electromagnet 126 of the lid removing-fitting device 113 is halted at a position immediately above the solvent container 13 having no lid and located in the sucking position. The device 113 fits the lid 13a over the solvent container 13 in the following manner. First, the second lift member 115 is lowered to a position slightly below the position where the lid 13a held to the electromagnet 126 comes into pressing contact with the container 13. This movement raises the magnet 126 relative to the guide block 121, permitting the first stopper 124 to move slightly upward out of contact with the upper surface of the guide block 121. Next, the electromagnet 126 is deenergized, and the lift member 115 is raised to its upper limit position. The magnetic attraction is no longer available when the magnet 126 is deenergized and demagnetized. When the lift member 115 is raised, the guide block 121 only rises first into contact with the first stopper 124, whereupon the magnet 126 also rises with the block. With the press member 128 of the push rod 123 pressed against the lid 13a by the elastic force of the spring 129 at this time, the magnet 126 reliably moves out of the contact with the lid 13a and rises, leaving the lid on the solvent container 13. Upon the first stopper 124 coming into contact with the second stopper 125, the push rod 123 also moves upward with the magnet out of contact with the lid 13a. When the second lift member 115 is raised to the upper limit position, the motor 135 is driven, and the liquid receiving receptacle 138 of the liquid receiver 130 in the standby position at the left end is moved to the operative position immediately below the nozzle 69 to receive the liquid if the liquid should drip from the suction opening 15a of the nozzle 69.

Subsequently, the first and second movable bodies 78, 83 are moved to bring the nozzle 69 to a sucking position immediately above a predetermined reaction vessel 48 in the holder 38 at the home position of the shaker 6, and the nozzle is halted. When the nozzle 69 is halted at the sucking position, the liquid receiving receptacle 138 of the liquid receiver 130 is moved from the operative position immediately below the nozzle 69 to the standby position at the left end. The motor 92 is thereafter driven as required to lower the nozzle 69 to a predetermined level. The motor 100 is then driven for the delivery of the liquid, moving the piston rods 98b, 99b of the pumps 98, 99 to the left limit position, whereby a positive pressure is supplied to the nozzle 69, and the liquid drawn in the nozzle tip 15 is discharged into the reaction vessel 48. Although the barrel 99a of the second pump 99 is also given a positive pressure at this time by the leftward movement of the piston rod 99b, the air in the barrel 99a is merely released to the atmosphere through the second valve V2 which is off.

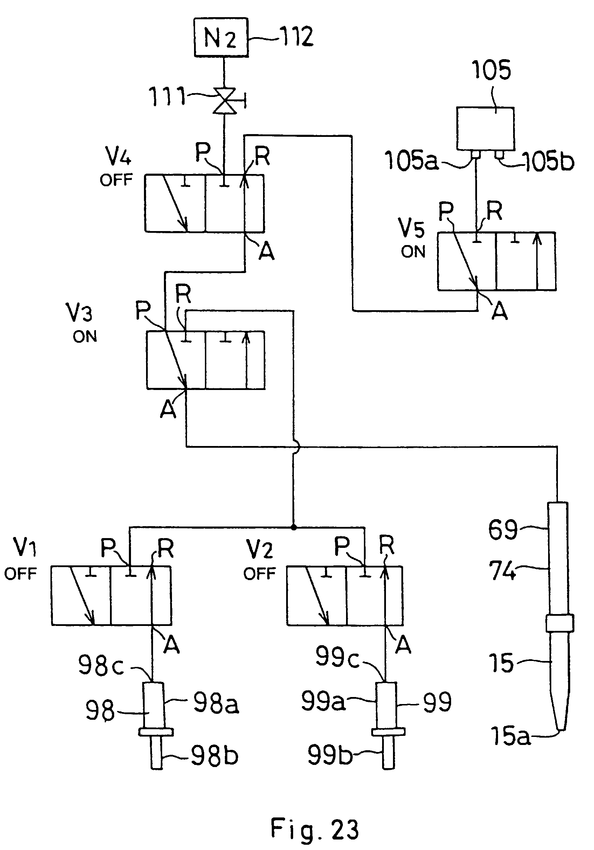

On completion of the discharge of the liquid by the movement of the piston rods 98b, 99b of the pumps 98, 99 to the left limit position, the motor 92 is driven when required, the nozzle 69 is raised to its upper limit position. The first and second movable bodies 78, 83 are then moved as described first to bring the electromagnet 126 of the lid removing-fitting device 113 to the position immediately above the solvent container 13 at the sucking position, whereupon the magnet is halted. The operation shown in FIGS. 23, 24 and 21 are performed until the electromagnet 126 is halted immediately above the solvent container 13.

First with reference to FIG. 23, the first valve V1 is turned off, and the third and fifth valves V3, V5 are turned on. When turned off, the first valve V1 cuts off the barrel 98a of the first pump 98 from the nozzle 69. The third valve V3 in on state causes the nozzle 69 to communicate with the outlet port A of the fourth valve V4. The fifth valve V5, when turned on, causes the vent port R of the fourth valve V4 to communicate with the atmosphere.

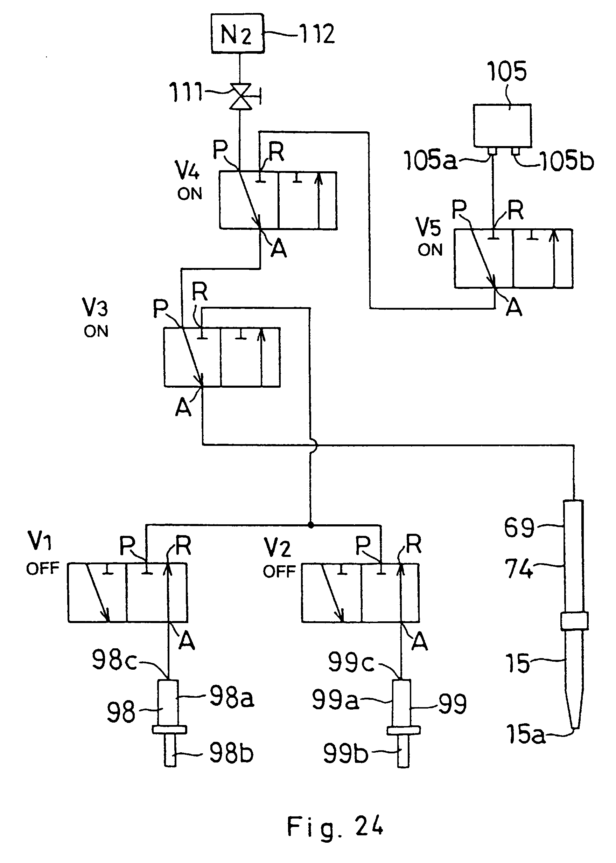

Next as seen in FIG. 24, the fourth valve V4 is turned on for purging with nitrogen. While the inlet port P of the fourth valve V4 is always supplied with nitrogen gas of predetermined pressure from the nitrogen supply device 112, the valve V4, when in off state, is blocked between the inlet port P and the outlet port A, confining the nitrogen gas in the inlet. However, when the fourth valve V4 is turned on, the inlet port P communicates with the outlet port A, permitting the nitrogen gas to flow through the fourth valve V4, third valve V3 and nozzle 69 and flow out from the suction opening 15a. The nitrogen purges the nozzle 69 and the channel 72 of the vapor pressure of organic solvent or the like remaining therein, ensuring accurate detection of the pressure difference described. The purging is done, for example, for 2 to 3 seconds. Although a very small amount of nitrogen gas flows from the inlet port P to the vent port R and then to the outlet port A of the fifth valve V5 the moment the fourth valve V4 is turned on, the fifth valve V5 is in on state, with the result that the nitrogen gas is released to the atmosphere from the inlet port P of the fifth valve V5 without flowing to the sensor 105. Accordingly no overload pressure will act on the sensor 105.

The fourth valve V4 is turned off after the specified period of purging with nitrogen, cutting off the nitrogen supply device 112 (the same state as in FIG. 23). The fifth valve V5 is further turned off, and the state of FIG. 21 is resumed. In this state, it is confirmed that the pressure difference between the atmospheric pressure and the internal pressure of the nozzle 69 and the channel 72 is smaller than a predetermined very low pressure value, i.e., that no pressure remains in the nozzle 69 or the channel 72, followed by repetition of the foregoing operation. The very low pressure value, which can be determined suitably, is, for example, 0.3 mm $H_2O$.

When the kind of solvent to be transferred is to be changed in the above operation, the used nozzle tip 15 is removed at the removing station 16 of the tip disposal portion 5 and discarded into the tip container 151 after the delivery of solvent to the reaction vessel 48. The new nozzle tip 15 to be used next is supplied from a specified position in the specified nozzle tip stand 14a, 14b or 14c of the nozzle tip holder 4, and is fitted to the nozzle 69.

Although the first syringe pump 98 is used for the transfer of the liquid in the foregoing description, the second syringe pump 99 is used depending on the kind of solvent to be transferred. When the second syringe pump 99 is used, the second valve V2 is turned on or off instead of turning on or off the first valve V1 in the foregoing description, with the first valve V1 left in off state.

A liquid (liquid material) is transferred from a material container 10 to reaction vessels 48 substantially in the same manner as above. Since the material container 10 has no lid, the container lid removing-fitting device 113 is not used.

With the present pipetting device 7, the nozzle 69 is halted upon detecting that the nozzle tip 15 has reached the liquid surface, and the nozzle tip 15 is dipped into the liquid by a predetermined amount, thereafter caused to draw in the liquid by suction as described above, and is therefore unlikely to be dipped into the liquid more than is necessary. It is accordingly possible to minimize the adhesion of the liquid to the outer peripheral surface of lower end portion of the nozzle tip 15, ensure an accurate pipetting operation by precluding the liquid from dripping or preventing variations in the quantity to be transferred, and reduce the frequency of replenishment of the container with the liquid. Furthermore, there is no likelihood of sucking in air, assuring the transfer of an accurate quantity of liquid.

The pipetting device is usable also for a close arrangement of containers which are small in opening size since the liquid surface can be detected merely by inserting the nozzle tip 15 into the container.

Since there is no need to supply a pressure (positive or negative) to the nozzle 69 during the descent of the nozzle 69, it is unnecessary to provide a pressure supply means in addition to the pressure supply means 71 for sucking in and discharging the liquid. After the nozzle tip 15 has reached the liquid surface, the tip 15 is dipped into the liquid by a predetermined amount, and the pressure supply means 71 is then operated to accurately suck the desired quantity of the liquid into the nozzle. The pressure supply means 71 is therefore easy to control.

Even if the ambient temperature changes, the pressure difference between the atmospheric pressure and the internal pressure of the nozzle 69 and the channel 72 in communication therewith remains unaltered. Further even if the nozzle 69 or channel 72 is subjected to a vibration during the descent of the nozzle 69, the internal pressure of the nozzle 69 and the channel 72 remains unaltered since no variation occurs in the inside volume of the nozzle 69 or the channel 72, consequently ensuring accurate detection of the liquid surface at all times.

The automated synthesis apparatus described performs a procedure for automatically preparing mixtures under the control of a control system having an unillustrated computer. For example, the procedure is as follows.

First, a solid material is placed into the first group of thirty reaction vessels 48 among the reaction vessels 48 in the holder 38 of the shaker 6. Next, the pipetting device 7 is used for transferring a solvent from a specified solvent container 13 to the first group of thirty reaction vessels 48 to dissolve or suspend the solid material in the solvent. Different liquid materials are then transferred from specified material containers 10 to the respective thirty vessels 48 of the first group by the pipetting device 7 for the start of reaction. The shaker 6 is operated for a predetermined period of time to stir the mixtures in the vessels 48 for reaction. When required at this time, a suitable heat medium, such as hot water or cold water, is circulated through the heat medium circulation space 62 in the vessel stand 38 of the shaker 6 to heat or cool the mixture to be reacted. On completion of the reaction, first ethyl acetate and then water are transferred from solvent containers 13 to the thirty reaction vessels 48 of the first group by the pipetting device 7 and thus added to the reaction mixtures (start of aftertreatment). Subsequently, the mixtures in the vessels 48 are stirred by operating the shaker 6, then allowed to stand with the shaker 6 stopped, and the supernatant ethyl acetate layers in the thirty vessels 48 of the first group are thereafter transferred by the pipetting device 6 to the respective thirty reaction vessels 48 of the second group at the left of and adjacent to the first, in succession from each vessel 48 of first group to the corresponding vessel of the second group (first extraction with ethyl acetate). Next, fresh ethyl acetate is transferred from the corresponding solvent container 13 to the thirty vessels 48 of the first group by the pipetting device 6, followed by stirring by the shaker 6, standing and transfer of the supernatant ethyl acetate layers to the thirty vessels 48 of the adjacent second group similarly (second extraction with ethyl acetate). Third extraction with ethyl acetate thereafter follows similarly. Next, fresh water is added from the corresponding solvent container 13 to the ethyl acetate in the thirty vessels 48 of the second group using the pipetting device 7, and the resulting mixtures are stirred by the shaker 6 and allowed to stand (washing of the extracts with water). The supernatant ethyl acetate layers in the thirty vessels 48 of the second group are then successively transferred by the pipetting device 6 further to the respective corresponding thirty reaction vessels 48 of the third group at the left of and adjacent to the second. Subsequently, the first movable body 78 is moved to position the nozzles 147 of the reaction mixture concentrating device 8 immediately above the respective thirty reaction vessels 48 of the third group, and the nozzles are halted. After the nozzles 147 are lowered by operating the motor 144, the solenoid valves 148 are opened to apply nitrogen gas to the inside of the reaction vessels 48 from the nozzles 147 for a predetermined period of time to concentrate the reaction mixtures to dryness. The nozzles 147 are raised on completion of application of nitrogen gas. In this way the treatment is completed. When required, however, DMSO (dimethyl sulfoxide) is added to the concentrated reaction mixtures from a solvent container 13 by the pipetting device 6 to prepare solutions for evaluation, and the evaluation solutions are successively transferred from the reaction vessels 48 to respective corresponding sample vessels in the holder 152 by the pipetting device 7 to complete the treatment.

When the pipetting device 7 is operated in the above procedure, the used nozzle tip 15 is discarded into the container 151 of the disposal portion 5 as required, and a new nozzle tip 15 is supplied by the bin 4 and fitted to the nozzle for use.

## Claims

1. An automated synthesis apparatus characterized in that the apparatus comprises:

    a container holder for stowing therein a plurality of liquid containers each containing a reaction solvent to be transferred,
    a nozzle tip holder for stowing therein disposable nozzle tips,
    a rotary shaker having a reaction vessel stand for shaking a plurality of reaction vessels as placed therein, and
    pipetting means movable between each of the holders and the reaction vessel stand of the rotary shaker and removably fittable with the nozzle tip automatically for sucking the solvent from the liquid container into the fitted nozzle tip and discharging the solvent into the reaction vessel.

2. An automated synthesis apparatus according to claim 1 which is characterized in that the apparatus comprises means for concentrating a reaction mixture within the reaction vessel to dryness.

3. An automated synthesis apparatus according to claim 1 or 2 which is characterized in that the rotary shaker comprises a drive device mounted on a fixed portion, a drive crank having a vertical drive shaft rotatably supported by the fixed portion and rotatable by the drive device and a vertical drive pin provided at an upper portion of the drive shaft and positioned horizontally away from an axis of the drive shaft, a driven crank having a vertical driven shaft rotatably supported by the fixed portion and a vertical driven pin provided at an upper portion of the driven shaft and positioned away from an axis of the driven shaft by the same amount in the same direction as the drive pin of the drive crank, and the reaction vessel stand, the reaction vessel stand being rotatably connected to the drive pin and the driven pin by a connecting member and rotatable by the drive shaft eccentrically thereof, the drive shaft being provided with balance means having a plurality of eccentric balancers for suppressing vibration owing to the eccentricity of the position of the center of gravity of the reaction vessel stand relative to the axis of the drive shaft.

4. An automated synthesis apparatus according to claim 3 which is characterized in that the balancers of the balance means are so arranged as to reduce the resultant force of centrifugal forces acting on the portion including the reaction vessel stand and all the balancers combined therewith and a resultant bending moment due to the centrifugal forces during rotation.

5. An automated synthesis apparatus according to claim 4 which is characterized in that the balance means has at least one balancer of a first kind and at least one balancer of a second kind, and the balancer of the first kind has a center of gravity positioned at the opposite side of the position of the center of gravity of the reaction vessel stand with respect to the axis of the drive shaft, the balancer of the second kind having a center of gravity positioned at the same side as the position of the center of gravity of the reaction vessel stand with respect to the axis of the drive shaft.

6. An automated synthesis apparatus according to claim 5 which is characterized in that one balancer of the first kind is provided at an upper portion of the drive shaft, and one balancer of the second kind is provided at a lower portion of the drive shaft.

7. An automated synthesis apparatus according to claim 6 which is characterized in that P and Q represented by the following equations are each in a predetermined range containing 1.

$$P = M1 \times R1/(M0 \times \bar{a}, + M2 \times R2)$$

$$Q = M0 \times \bar{a} \times L1/M2 \times R2 \times L2$$

wherein M0, M1 and M2 are the weights of the reaction vessel stand, the balancer of the first kind and the balancer of the second kind respectively, $\underline{a}$, R1 and R2 are the respective horizontal eccentricity distances of the positions of the centers of gravity of the reaction vessel stand, the balancer of the first kind and the balancer of the second kind from the axis of the drive shaft, L1 is the vertical distance from the position of the center of gravity of the reaction vessel stand to the position of the center of gravity of the balancer of the first kind, and L2 is the vertical distance from the position of the center of gravity of the balancer of the first kind to the position of the center of gravity of the balancer of the second kind.

8. An automated synthesis apparatus according to claim 7 which is characterized in that P is in the range of 0.8 to 1.2, Q being in the range of 0.8 to 1.2.

9. An automated synthesis apparatus according to any one of claims 1 to 8 which is characterized in that the pipetting means comprises a tubular nozzle having a lower end fittable with a nozzle tip, nozzle drive means for moving the nozzle in a horizontal plane and moving the nozzle upward and downward, pressure supply means for supplying a positive pressure and a negative pressure to the nozzle, a channel holding the nozzle in communication with the pressure supply means, and liquid surface sensor means for detecting that a liquid inlet-outlet opening of the nozzle tip at a lower end thereof has reached a liquid surface, the liquid surface sensor means comprising differential pressure sensor means in communication with the channel for detecting the pressure difference between the internal pressure of the nozzle and the channel communicating therewith and the atmospheric pressure, and detector means for detecting that the liquid inlet-outlet opening of the nozzle tip has reached the liquid surface by an increase in the pressure difference over a predetermined value.

10. An automated synthesis apparatus according to claim 9 which is characterized in that gas supply means is provided in communication with the channel for supplying a gas to the nozzle and the channel communicating therewith.

Fig.1

Fig. 2

Fig.3

Fig.4

EP 0 976 448 A1

Fig.5

Fig.6

Fig.7

Fig.8

Fig.9

Fig.10

Fig.11

EP 0 976 448 A1

Fig.12

Fig.13

Fig.14

EP 0 976 448 A1

Fig.15

33

Fig.16

EP 0 976 448 A1

EP 0 976 448 A1

Fig.17

Fig.18

EP 0 976 448 A1

83　　120　120a　　118　85

91

70

93a　93　　136　136a　134

78

133a

130　131　132　　80

Fig.19

Fig. 20

EP 0 976 448 A1

Fig. 21

Fig. 22

N2 —112

111

V4
OFF
P   R

A

105
105a        105b

V5
ON
P   R

A

V3
ON
P   R

A

V1
OFF
P   R

A
98c

98     98a

98b

V2
OFF
P   R

A
99c

99a     99

99b

69

74

15

15a

Fig. 23

Fig. 24

# INTERNATIONAL SEARCH REPORT

| International application No. |
|---|
| PCT/JP98/01003 |

| A. CLASSIFICATION OF SUBJECT MATTER |
|---|
| Int.Cl⁶ B01J19/26 |

According to International Patent Classification (IPC) or to both national classification and IPC

| B. FIELDS SEARCHED |
|---|
| Minimum documentation searched (classification system followed by classification symbols)<br>Int.Cl⁶ B01J19/26, B01F11/00, G01N35/10 |
| Documentation searched other than minimum documentation to the extent that such documents are included in the fields searched<br>Jitsuyo Shinan Koho     1926-1998<br>Kokai Jitsuyo Shinan Koho   1971-1998 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP, 5-99936, A (Aroka K.K.),<br>April 23, 1993 (23. 04. 93),<br>Column 3, line 19 to column 4 line 20, column 5<br>lines 11 to 16, drawings (Family: none) | 1, 9-10<br>2-8 |
| Y<br>A | JP, 2-275362, A (Hitachi, Ltd.),<br>November 9, 1990 (09. 11. 90),<br>Page 5, upper left column to page 6, upper left column,<br>drawings (Family: none) | 1-2<br>3-10 |
| Y<br>A | JP, 63-7829, A (Taiyo Kagaku Co., Ltd.),<br>January 13, 1998 (13. 01. 98),<br>Page 2, upper right column to lower left column,<br>drawings (Family: none) | 1, 9-10<br>3-8 |
| A | Microfilm of the specification and drawings annexed<br>to the request of Japanese Utility Model Application<br>No. 92734/1982 (Laid-open No. 195638/1983)<br>(Yamato Scientific Co., Ltd.),<br>December 26, 1983 (26. 12. 83),<br>drawings (Family: none) | 3-8 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| June 3, 1998 (03. 06. 98) | June 16, 1998 (16. 06. 98) |
| Name and mailing address of the ISA/<br>Japanese Patent Office | Authorized officer |
| Facsimile No. | Telephone No. |

Form PCT/ISA/210 (second sheet) (July 1992)